# EUROPEAN PATENT APPLICATION

(11) **EP 2 415 794 A1**
(43) Date of publication of application: **08.02.2012**
(21) Application number: 10761542.9
(22) Date of filing: 10.03.2010
(51) Int. Cl.: C08F 290/14, C08F 2/44, G02B 1/04

(54) **CURABLE COMPOSITION AND CURED PRODUCT THEREOF**

(30) Priority: 30.03.2009 JP 2009082446; 04.09.2009 JP 2009204830
(71) Applicant: Showa Denko K.K., Tokyo 105-8518 (JP)
(72) Inventor: URAKAWA, Yoshifumi, Tokyo 105-8518 (JP); YAMAKI, Shigeru, Tokyo 105-8518 (JP); MIYATA, Hideo, Tokyo 105-8518 (JP); MITARAI, Nobuyuki, Tokyo 105-8518 (JP); YAMAKI, Saori, Tokyo 105-8518 (JP); ISHII, Nobuaki, Tokyo 105-8518 (JP)
(74) Representative: Strehl Schübel-Hopf & Partner
(86) International application number: PCT/JP2010/053984
(87) International publication number: WO 2010/116841

(57) **Abstract**

The present invention provides a curable composition having a proper viscosity and excellent handling properties, and a cured product that is obtainable by curing the curable composition and has excellent transparency, heat resistance and resistance to environment and a low Abbe's number, and further can effectively decrease chromatic aberration by the combined use with a material having a high Abbe's number.

The curable composition is **characterized by** comprising (a) silica fine particles, (b) a (meth)acrylate compound having at least two ethylenic unsaturated groups and having no ring structure, (c) a (meth)acrylate compound having at least two ethylenic unsaturated groups and having an aromatic ring structure and (d) a polymerization initiator, wherein the silica particles (a) are surface treated by a specific silane compound (e) and a specific silane compound (f).

## Description

### TECHNICAL FIELD

The present invention relates to a curable composition having a proper viscosity and excellent handling properties. Furthermore, it relates to a cured product obtainable by curing the curable composition which product has excellent transparency, heat resistance, resistance to environment and molding processability and has a low Abbe's number, and can decrease chromatic aberration by the combined use of a material having a high Abbe's number.

### TECHNICAL BACKGROUND

Recently, materials having excellent optical capabilities have been desired with the progress of optical devices, optical communication and optical industries such as displays and the like. Examples of the above materials are optical lens, optical disk substrates, plastic substrates for liquid crystal display elements, substrates for color filters, plastic substrates for organic EL display elements, solar battery substrates, touch panels, optical elements, optical waveguides and LED sealing materials. Particularly, the optical capabilities for optical lens, optical elements and optical waveguides have been demanded strongly.

For the materials of substrates for liquid crystal display elements, substrates for color filters, substrates for organic EL elements, substrates for solar batteries and touch panels, an inorganic glass is generally used in many cases. However, a glass plate easily breaks, cannot be bended, has a high specific gravity and is unsuitable for decreasing the weight of substrates. Recently, in place of the glass plates, the attempt of using plastic materials has been recently conducted in many cases.

As materials of optical lens, optical elements, optical waveguides and LED sealing materials, a plastic material having reflow resistance and excellent heat resistance has been desired in recent years.

Moreover, for the optical materials, it has been demanded to get picture definition by high picture quality and high picture element as shown in optical lens. For the sake of the demand, it is important in effect to decrease the chromatic aberration of a lens. The combined use of a material having a high Abbe's number and a material having a low Abbe's number is effective in order to decrease the chromatic aberration.

For example, JP-A-H10(1998)-77321 (Patent document 1) discloses that a member obtainable by curing, with an active energy ray, a resin composition made from a non-crystalline thermoplastic resin and a bis (meth) acrylate curable with an active energy ray can be suitably used to optical lens, optical disk substrates and plastic liquid crystal substrates in place of glass substrates. The transparency of the member may lower by the difference between the refractive index of the non-crystalline thermoplastic resin and the refractive index of the resin obtained by curing bis(meth)acrylate with an active energy ray.

JP-A-H10(1998)-298252 (Patent document 2) discloses that a specific silane compound is hydrolyzed in a colloidal silica dispersion and condensation polymerized to prepare a silica condensed polymer and the silica condensed polymer is homogeneously dispersed in a radical polymerizing vinyl compound such as methyl methacrylate and the like, or a bisphenol A type ethylene oxide modified (meth)acrylate to prepare a curable composition capable of preparing cured products having excellent transparency and rigidity. However, the heat resistance of the cured product is not disclosed in the document.

JP-B-4008246 (Patent document 3) discloses that a composition has a specific alicyclic structure and comprises a bi-functional (meth) acrylate and a colloidal silica dispersed in an organic solvent, a composite composition is obtained by removing the organic solvent from the composition and a cured product is obtained by crosslinking the composite composition. This document discloses the transparency and heat resistance, but it does not disclose that in applying the cured product to optical parts such as optical lens and the like, the required refractive index has a small change by temperature, that is to say, it does not disclose the resistance to environment of the cured product.

An example of a plastic material used conventionally as a lens may include polycarbonate. JP-A-2003-90901 (Patent document 4) discloses a lens formed from a copolymerized polycarbonate resin or a polycarbonate resin blend obtainable from a dihydroxy compound containing cyclohexane dimethanol and a specific bisphenol in a specific proportion. The invention in this patent document solves the subject of attaining the high transparency, high impact resistance and low Abbe's number of a resulting plastic material, but the effect of heat resistance is insufficient.

For applying the plastic material to optical devices such as optical lenses and optical waveguides in place of the glass plate, it is desired that the plastic material has low water absorption and even if it absorbs water, the refractive index does not change. Moreover, it is also desired that the changed amount of the refractive index by temperature is small. Patent documents 1 to 4 do not disclose the change of the environment resistance of the refractive index of the plastic material.

JP-A-2002-97217 (Patent document 5) discloses the following two items.
(1) To a sulfur-containing (meth)acrylate compound, a specific amount of a polymerization inhibitor is added together with a polymerization initiator and thereby a composition having handling properties in the process from the viewpoints of a balance between refractive index and fluidity is prepared.
(2) From the composition, an optical material having high transparency and capable of preparing molded products after curing having a high refractive index is prepared.

Patent document 5 discloses that the composition is liquid at ordinary temperature but does not disclose a specific viscosity. Furthermore, it does not disclose the transparency concerning a cured product obtainable by curing the composition and does not disclose the heat resistance. The cured product has a fear such that coloring and deterioration are easily caused by heat and thereby the transparency is damaged because of containing sulfur.

### PRIOR ART

### PATENT DOCUMENT

| | |
|---|---|
| Patent document 1: | JP-A-H10(1998)-77321 |
| Patent document 2: | JP-A-H10(1998)-298252 |
| Patent document 3: | JP-B-4008246 |
| Patent document 4: | JP-A-2003-90901 |
| Patent document 5: | JP-A-2002-97217 |

### SUMMARY OF THE INVENTION

### SUBJECT TO BE SOLVED BY THE INVENTION

The present invention has been done under the above circumstances and it is an object of the present invention to provide a curable composition having a proper viscosity and excellent handling properties. It is another object of the invention to provide a curable composition capable of preparing, by curing, a cured product which has excellent transparency, heat resistance and resistance to environment and has a low Abbe's number, and can decrease chromatic aberration by the combined use of a material having a high Abbe's number.

### MEANS FOR SOLVING THE SUBJECT

The present inventors have been earnestly studied in order to attain the objects and found that the curable composition which comprises (a) silica fine particles which surfaces are treated by a specific silane compound, (b) a (meth)acrylate compound having at least two ethylenic unsaturated groups and having no ring structure, (c) a (meth) acrylate compound having at least two ethylenic unsaturated groups and having an aromatic ring structure, (d) a polymerization initiator can solve the above objects. Herein, " (meth) acrylate" means an acrylate and/or a methacrylate. Hereinafter, the meaning refers to a (meth)acrylate compound.

That is to say, the present invention relates to the following items.

[1] The curable composition of the invention comprises a) silica fine particles, (b) a (meth)acrylate compound having at least two ethylenic unsaturated groups and having no ring structure, (c) a (meth)acrylate compound having at least two ethylenic unsaturated groups and having an aromatic ring structure, (d) a polymerization initiator wherein the silica particles (a) are surface treated by a silane compound (e) represented by the following formula (1) and a silane compound (f) represented by the following formula (2).

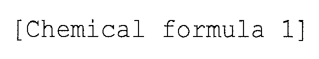

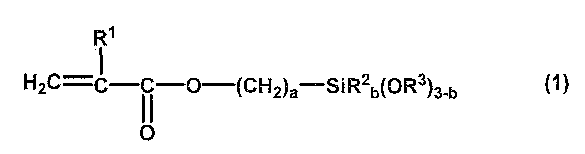

In the formula (1), R¹ is hydrogen atom or a methyl group, R² is an alkyl group having 1 to 3 carbon atoms or a phenyl group, R³ is hydrogen atom or a hydrocarbon group having 1 to 10 carbon atoms, a is an integer of 1 to 6 and b is an integer of 0 to 2.

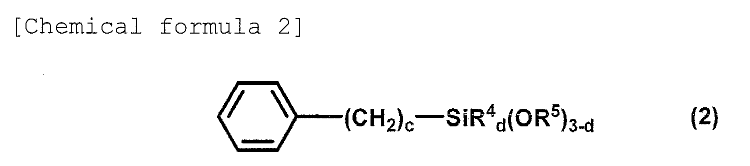

In the formula (2), R⁴ is an alkyl group having 1 to 3 carbon atoms or a phenyl group, R⁵ is hydrogen atom or a hydrocarbon group having 1 to 10 carbon atoms, c is an integer of 0 to 6 and d is an integer of 0 to 2.

[2] The curable composition described in [1] further comprises (g) a (meth)acrylate compound having one ethylenic unsaturated group and an alicyclic structure and/or aromatic ring structure.

[3] The curable composition described in [1] or [2] wherein the (meth)acrylate compound (b) is a (meth)acrylate compound having 3 ethylenic unsaturated groups and having no ring structure.

[4] The curable composition described in any one of [1] to [3] wherein the (meth)acrylate compound (c) is a compound represented by the following formula (3) and/or a compound represented by the following formula (4).

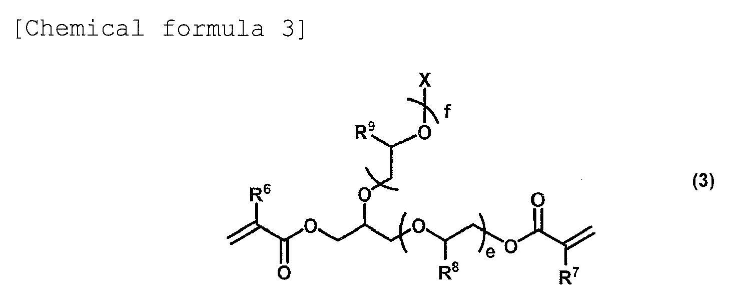

In the formula [3], each of R⁶, R⁷, R⁸ and R⁹ is independently hydrogen atom or a methyl group, X is an organic group having an aromatic ring and 6 to 30 carbon atoms and each of e and f is independently an integer of 0 to 3.

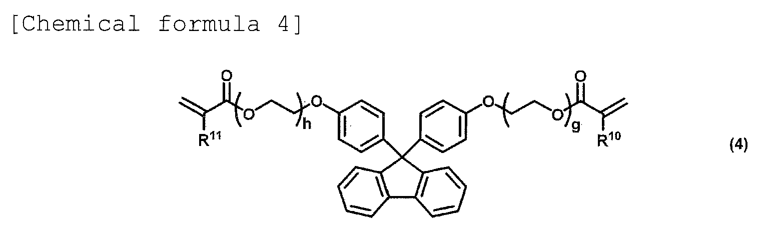

In the formula [4], each of R¹⁰ and R¹¹ is independently hydrogen atom or a methyl group and each of g and f is independently an integer of 0 to 3.

[5] The curable composition described in any one of [1] to [4] wherein the silica fine particles (a) are surface treated by 5 to 40 parts by mass of the silane compound (e) based on 100 parts by mass of the silica fine particles (a) and 5 to 40 parts by mass of the silane compound (f) based on 100 parts by mass of the silane compound (a).

[6] The curable composition described in any one of [2] to [5] wherein a homopolymer of each of the (meth) acrylate compound (b), the (meth)acrylate compound (c) and the (meth)acrylate compound (g) has a glass transition temperature of not lower than 80° C.

[7] The curable composition described in any one of [1] to [6] which has a viscosity at 25° C of 30 to 10,000 mPa· s.

[8] A cured product obtainable by curing the curable composition described in any one of [1] to [7].

[9] The cured product described in [8] which has an Abbe's number of not more than 50.

[10] An optical material comprising the cured product described in [8] or [9].

[11] An optical lens comprising the cured product described in [8] or [9].

### EFFECT OF THE INVENTION

The present invention can provide a curable composition having a proper viscosity and excellent handling properties. Furthermore, it can provide a cured product by curing the curable composition, and the cured product has excellent transparency, heat resistance and resistance to environment, and has a low Abbe's number and can decrease chromatic aberration with the combined use of a material having a high Abbe's number.

### EMBODIMENT FOR CARRYING OUT THE INVENTION

The embodiment of the present invention will be described below.

### [Curable composition]

The curable composition of the present invention comprises (a) silica fine particles, (b) a (meth)acrylate compound having at least two ethylenic unsaturated groups and having no ring structure (hereinafter simply referred to "reactive (meth)acrylate (b)"), (c) a (meth)acrylate compound having at least two ethylenic unsaturated groups and having an aromatic ring structure (hereinafter simply referred to "reactive (meth) acrylate (c)"), and a polymerization initiator (d), and the silica fine particles (a) are surface treated by specific silane compounds (e) and (f). Furthermore, the curable composition of the present invention may comprise a (meth) acrylate compound (g) having one ethylenic unsaturated group and an alicyclic structure and/or an aromatic ring structure (hereinafter simply referred to "reactive (meth)acrylate (g)", and may comprise various additives. Each of these constitution components is described below.

### Silica fine particles (a)

The silica fine particles (a) preferably used in the present invention have an average particle diameter of 1 to 100 nm. When the average particle diameter is less than 1 nm, the viscosity of the curable composition prepared is increased and the content of the silica fine particles (a) in the curable composition is limited and also the dispersibility thereof in the curable composition deteriorates with the result that a cured product obtainable by curing the curable composition (hereinafter, simply referred to "cured product") tends to do not have sufficient transparency and heat resistance. When the average particle diameter is over 100 nm, the transparency of a cured product occasionally deteriorates.

From the viewpoint of a balance between the viscosity of the curable composition and the transparency of the cured product, the silica fine particles (a) have an average particle diameter of more preferably 1 to 50 nm, furthermore preferably 5 to 50 nm, most preferably 5 to 40 nm. The average particle diameter of the silica fine particles is determined in the following way.
Silica fine particles are observed by a high resolution conventional transmission electron microscope (H-9000 model manufactured by Hitachi Ltd.). From the images of the fine particles observed, any 100 silica fine particle images are selected and the average particle diameter thereof is determined as their number average particle diameter by a known image data statistical treating procedure.

In the present invention, in order to increase the filled amount of the silica fine particles (a) to the cured product, silica fine particles having different average particle diameters may be mixed. Furthermore, a porous silica sol, and a composite metal oxide of silicon and aluminum, magnesium or zinc may be used as the silica fine particles (a).

The content of the silica fine particles (a) in the curable composition is, as surface-treated silica fine particles, preferably 20 to 80 % by mass, more preferably 20 to 60 % by mass from the viewpoint of the heat resistance of the cured product and the viscosity of the curable composition. Since when the content is in the above range, the fluidity of the curable composition and the dispersibility of the silica fine particles (a) in the curable composition are good, the cured product having sufficient strength and heat resistance can be easily produced using such a curable composition.

As the silica fine particles (a), it is preferred to use silica fine particles dispersed in an organic solvent from the viewpoint of dispersibility in the curable composition. The organic solvent preferably used herein dissolves organic components (such as the reactive (meth) acrylate (b), the reactive (meth)acrylate (c) and the reactive (meth) acrylate (g) as described later) contained in the curable composition.

Examples of the organic solvent are alcohols, ketones, esters and glycol ethers. From the viewpoint of the ease of removal of the solvent in the solvent removing step for removing the organic solvent from the mixed solution of the silica fine particles (a), the reactive (meth)acrylate (b), the reactive (meth)acrylate (c) and the reactive (meth)acrylate (g), preferable examples thereof are alcohol organic solvents such as methanol, ethanol, isopropyl alcohol, butyl alcohol and n-propyl alcohol; and ketone organic solvents such as methylethyl ketone and methylisobutyl ketone.

Among them, isopropyl alcohol is particularly preferred. When the silica fine particles (a) dispersed in isopropyl alcohol is used, the curable composition prepared after the removal of the solvent has a lower viscosity as compared with those prepared with other solvents, and thereby the curable composition having a low viscosity can be prepared stably.

The silica fine particles dispersed in the organic solvent can be prepared by a conventionally known process, and it is available as Trade Name SNOWTEX® IPA-ST (manufactured by Nissan Chemical Industries Ltd.).

The silica fine particles (a) used in the present invention are surface treated with the silane compound (e) and the silane compound (f). Each of the silane compounds is described.

### Silane compound (e)

The silane compound (e) is a compound represented by the following formula (1).

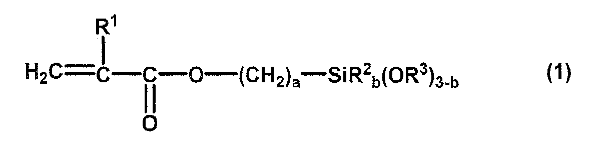

In the formula (1), R¹ is hydrogen atom or a methyl group, R² is an alkyl group having 1 to 3 carbon atoms or a phenyl group, R³ is hydrogen atom or a hydrocarbon group having 1 to 10 carbon atoms, a is an integer of 1 to 6 and b is an integer of 0 to 2. When the b is 2, two R²s may be the same or different each other, when b is not more than 1, plural R³s may be the same or different each other.

The phenyl group may be bonded with a substituent within the limit of not missing the effect of the present invention.

From the viewpoint of decreasing the viscosity and storage stability of the curable composition, it is preferred that R² is a methyl group, R³ is a methyl group and a is 3 and b is 0.

The silane compound (e) is used in order to decrease the viscosity of the curable composition and improve the dispersion stability of the silica fine particles (a) in the curable composition by reacting with the (meth) acrylate (b) as described later, and also in order to decrease the curing shrinkage in curing the curable composition and to give the molding processability to a cured product. Namely, it is not preferred that the silica fine particles (a) are not surface treated with the silane compound (e), because the viscosity of the curable composition increases, the curing shrinkage at the time of curing is large and a cured product is brittle and thereby cracks in the cured product will occur.

Examples of the silane compound (e) are γ-acryloxy propyl dimethyl methoxy silane, y-acryloxy propyl methyl dimethoxy silane, γ-acryloxy propyl diethyl methoxy silane, γ-acryloxy propyl ethyl dimethoxy silane, γ-acryloxy propyl trimethoxy silane, γ**-**acryloxy propyl dimethyl ethoxy silane, γ-acryloxy propyl methyl diethoxy silane, γ-acryloxy propyl diethyl ethoxy silane, γ-acryloxy propyl ethyl diethoxy silane, γ-acryloxy propyl triethoxy silane, γ-methacryloxy propyl dimethyl methoxy silane, γ-methacryloxy propyl methyl dimethoxy silane, γ-methacryloxy propyl diethyl methoxy silane, γ-methacryloxy propyl ethyl dimethoxy silane, γ-methacryloxy propyl trimethoxy silane, γ-methacryloxy propyl dimethyl ethoxy silane, γ-methacryloxy propyl methyl diethoxy silane, γ-methacryloxy propyl diethyl ethoxy silane, γ-methacryloxy propyl ethyl diethoxy silane and γ-methacryloxy propyl triethoxy silane.

From the viewpoint of aggregation prevention of the silica fine particles (a) in the curable composition and decrease of the viscosity of the curable composition and storage stability, preferable examples are γ-acryloxy propyl dimethyl methoxy silane, γ-acryloxy propyl methyl dimethoxy silane, γ-methacryloxy propyl dimethyl methoxy silane, γ-methacryloxy propyl methyl dimethoxy silane, γ-acryloxy propyl trimethoxy silane and γ-methacryloxy propyl trimethoxy silane, and more preferable examples thereof are γ-methacryloxy propyl trimethoxy silane and γ-acryloxy propyl trimethoxy silane. These may be used singly or two or more is combined for use.

These silane compounds (e) can be produced by known methods and are on the market.

In the surface treatment of the silica fine particles (a), the silane compound (e) is used in an amount of usually 5 to 40 parts by mass, preferably 10 to 30 parts by mass based on 100 parts by mass of the silica fine particles (a). When the amount of the silane compound (e) used is less than 5 parts by mass, the viscosity of the curable composition increases and the dispersibility of the silica fine particles (a) in the curable composition decreases to cause gelation. When the amount of the silane compound (e) used is over 40 parts by mass, aggregation of the silica fine particles (a) is induced occasionally. When the silica fine particles dispersed in the organic solvent are used as the silica fine particles (a), the mass of the silica fine particles (a) indicates only the silica fine particles themselves dispersed in the organic solvent. This mass refers to hereinafter. The surface treatment of the silica fine particles (a) is described later.

When the curable composition contains large amounts of acrylates (the reactive acrylate (b), the reactive acrylate (c) and the reactive acrylate (g)), it is preferred to use, as the silane compound (e), a silane compound having an acryl group, namely the silane compound represented by the formula (1) in which R¹ is hydrogen atom. When the curable composition contains large amounts of (meth) acrylates (the reactive (meth) acrylate (b), the reactive (meth) acrylate (c) and the reactive (meth) acrylate (g)), it is preferred to use, as the silane compound (e), a silane compound having a methacryl group, namely the silane compound represented by the formula (1) in which R¹ is hydrogen atom. In these cases, the curing reaction is easily caused in curing the curable composition of the present invention.

### Silane compound (f)

The silane compound (f) used in the present invention is a compound represented by the following formula (2).

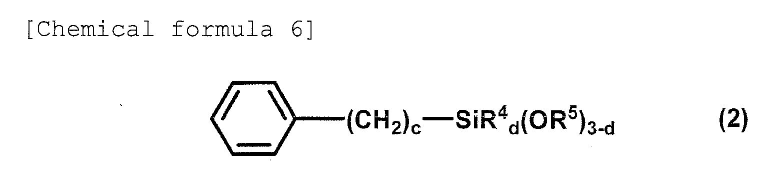

In the formula (2), R⁴ is an alkyl group having 1 to 3 carbon atoms or a phenyl group, R⁵ is hydrogen atom or a hydrocarbon group having 1 to 10 carbon atoms, c is an integer of 0 to 6 and d is an integer of 0 to 2. When d is 2, two R⁴s may be the same or different each other. When d is not more than 1, plural R⁵s may be the same or different each other.

The above phenyl group may be bonded with a substituent within the limit of not missing the effect of the present invention.

From the viewpoint of decrease of the viscosity of the curable composition and storage stability thereof, it is preferred that R⁴ is methyl group, R⁵ is methyl group, c is 0 or 1 and d is 0.

The reaction of the silica fine particles (a) and the silane compound (f) gives hydrophobicity on the surfaces of the silica fine particles (a), and thereby the dispersibility of the silica fine particles in the organic solvent is improved and also the compatibility of the silica fine particles (a) and the reactive (meth)acrylate (c) is favorable. Thereby, the viscosity of the curable composition is decreased and the storage stability of the curable composition is improved.

Examples of the silane compound (f) are phenyl dimethyl methoxy silane, phenyl methyl dimethoxy silane, phenyl diethyl methoxy silane, phenyl ethyl dimethoxy silane, phenyl trimethoxy silane, phenyl dimethyl ethoxy silane, phenyl methyl diethoxy silane, phenyl diethyl ethoxy silane, phenyl ethyl diethoxy silane, phenyl triethoxy silane, benzyl dimethyl methoxy silane, benzyl methyl dimethoxy silane, benzyl diethyl methoxy silane, benzyl ethyl dimethoxy silane, benzyl trimethoxy silane, benzyl dimethyl ethoxy silane, benzyl methyl diethoxy silane, benzyl diethyl ethoxy silane, benzyl ethyl diethoxy silane, benzyl triethoxy silane and diphenyl dimethoxy silane.

From the viewpoint of the decrease of the viscosity and the storage stability of the curable composition, preferable examples thereof are phenyl dimethyl methoxy silane, phenyl methyl dimethoxy silane, phenyl diethyl methoxy silane, phenyl ethyl dimethoxy silane, phenyl trimethoxy silane and diphenyl dimethoxy silane. More preferable examples thereof are phenyl trimethoxy silane and diphenyl dimethoxy silane. These silane compounds may be used singly or two or more may be combined for use.

These silane compounds (f) can be prepared by a conventionally known process and are on the market.

In the surface treatment of the silica fine particles (a), the silane compound (f) is used in an amount of usually 5 to 40 parts by mass, preferably 10 to 30 parts by mass based on 100 parts by mass of the silica fine particles (a). When the amount of the silane compound (f) used is less than 5 parts by mass, the viscosity of the curable composition is increased to cause gelation or decrease the heat resistance of a cured product. When the amount of the silane compound (f) used is over 40 parts by mass, aggregation of the silica fine particles (a) is induced occasionally. The surface treatment of the silica fine particles (a) will be described later.

When the total amount of the silane compound (e) and the silane compound (f) is over 80 parts by mass based on 100 parts by mass of the silica fine particles (a), aggregation and gelation are occasionally caused by reaction of silica fine particles in the surface treatment of silica fine particles (a) because the amount of the components to be processed is large.

### Reactive (meth) acrylate (b)

Examples of the (meth) acrylate compound (b) having at least two ethylenic unsaturated groups and no ring structure used in the present invention may include trimethylol propane tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate and trimethylol propane trioxyethyl (meth)acrylate. In the reactive (meth)acrylate (b) used in the present invention, the number of the ethylenic unsaturated groups is usually not more than 6.

When the curable composition containing these compounds according to the present invention is cured, a cured product having excellent heat resistance is formed.

Among these compounds, from the viewpoint of the heat resistance of the cured product, the (meth) acrylate compound (b) having three ethylenic unsaturated groups is preferred, and that having a homopolymer glass transition temperature of not lower than 80°C is preferred. Particularly, trimethylol propane tri (meth) acrylate is most preferable because it has a homopolymer glass transition temperature of not lower than 200°C and the shrinkage by curing is relatively low among the polyfunctional (meth)acrylates. The homopolymer glass transition temperature is usually not higher than 300°C.

The homopolymer glass transition temperature is determined by the following method.

In 100 parts by mass of the reactive (meth)acrylate (b), 1 part by mass of diphenyl-(2,4,6-trimethylbenzoyl)phosphine oxide (Trade Name Lucirin TPO-L manufactured by BASF Japan Ltd.) is dissolved as a photopolymerization initiator. The resulting solution is applied on a glass substrate (50 mm x 50 mm) in an amount such that a cured film has a thickness of 200 µm, and the coated film is exposed in an exposure device equipped with an ultrahigh pressure mercury lamp at 4 J/cm² to prepare the cured film. Using the cured film, the glass transition temperature is determined from the peak temperature of tan δ value measured using DMS6100 (manufactured by Seiko Instruments Inc.) in a tensile mode at a temperature of 30°C to 300°C at a temperature elevating rate of 2°C/min at a frequency of 1 Hz.

The amount of the reactive (meth)acrylate (b) used in the present invention is preferably 20 to 500 parts by mass based on 100 parts by mass of the silica fine particles (a) prepared before surface treatment, more preferably 30 to 300 parts by mass, furthermore preferably 50 to 200 parts by mass from the viewpoints of the viscosity of the curable composition, the dispersion stability of the silica fine particles (a) in the curable composition and the heat resistance of the cured product. When the amount is less than 20 parts by mass, the viscosity of the curable composition is increased to cause gelation. When the amount is over 500 parts by mass, the shrinkage of the curable composition at the time of curing is increased to cause warpage and cracks in the cured product.

### Reactive (meth)acrylate (c)

The reactive (meth) acrylate (c) used in the present invention is a compound having at least two ethylenic unsaturated groups and an aromatic ring structure. The curable composition of the present invention contains the reactive (meth)acrylate (c) with the result that the Abbe's number of the resulting cured product can be lowered. In the reactive (meth)acrylate (c) used in the present invention, the number of ethylenic unsaturated groups is usually not more than 6.

As the reactive (meth)acrylate (c), a compound represented by the following formula (3) is preferably used from the viewpoints of the heat resistance of the resulting cured product prepared from the curable composition of the present invention and lowering of Abbe's number of the cured product.

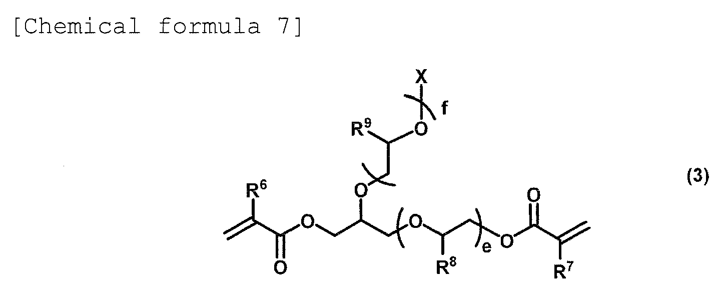

In the formula [3], each of R⁶, R⁷, R⁸ and R⁹ is independently hydrogen atom or a methyl group, X is an organic group having an aromatic ring and 6 to 30 carbon atoms and each of e and f is independently an integer of 0 to 3. When e is 2 or more, plural R⁸s may be the same or different each other. When f is 2 or more, plural R⁹s may the same or different each other.

The aromatic ring is a unsaturated ring structure such that atoms having a π electron are present in a ring form, and "an carbon number of 6 to 30" means that the number of carbons including carbons of the aromatic ring is 6 to 30.

In the formula (3), R⁶, R⁷, R⁸ and R⁹ are preferably methyl groups from the viewpoint of improving the heat resistance of a resulting cured product.

In the formula (3), each of e and f is preferably 0 or 1 independently, more preferably 0 from the viewpoint of improving the heat resistance of a resulting cured product and easiness of acquisition of the raw materials.

In the formula (3), the carbon number of X is preferably 7 to 24, more preferably 7 to 19, furthermore preferably 7 to 15 from the viewpoint of decreasing the Abbe's number and decreasing the viscosity of the curable composition of the present invention.

Examples of X may include groups represented by the following structural formulas (i) to (p).

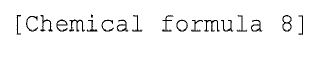

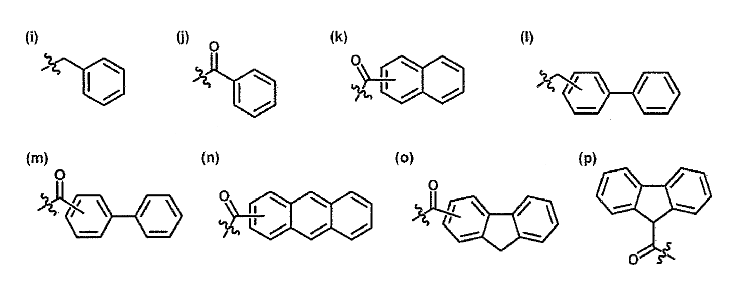

In the structural formulas, X is bonded to the compound of formula (3) at the position represented by a wavy line.

Among the groups, the group (k) having a naphtholyl skeleton and the group (m) having a phenylbenzoyl skeleton are preferred from the viewpoint of refractive index, viscosity and easiness of acquisition of the raw materials.

Namely, the aromatic group-containing (meth)acrylate compound represented by the formula (5) (hereinafter, sometimes referred to "aromatic group-containing (meth)acrylate compound (1) ") and the aromatic group-containing (meth)acrylate compound represented by the formula (6) described later are particularly preferred as the reactive (meth)acrylate (c).

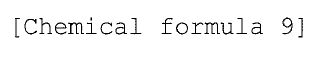

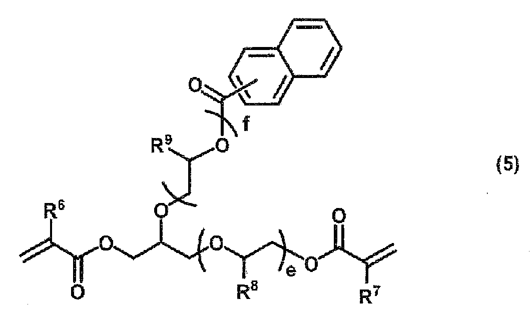

In the formula (5), each of R⁶, R⁷, R⁸ and R⁹ is hydrogen or a methyl group independently, and each of e and f is an integer of 0 to 3 independently. When e is 2 or more, plural R⁸s may be the same or different each other. When f is 2 or more, plural R⁹ may be the same or different each other.

In the formula (5), R⁶, R⁷, R⁸ and R⁹ are preferably methyl groups from the viewpoint of improving the heat resistance of a resulting cured product.

In the formula (5), each of e and f is preferably 0 or 1 independently, more preferably 0 from the viewpoints of improving the heat resistance of a resulting cured product and easiness of acquisition of the raw materials.

In the formula (5), the carbonyl group in the naphthoyl group is preferably bonded at a a-position of naphthalene from the viewpoint of handling properties of the raw materials.

Namely, the compound having the following structure is particularly preferred.

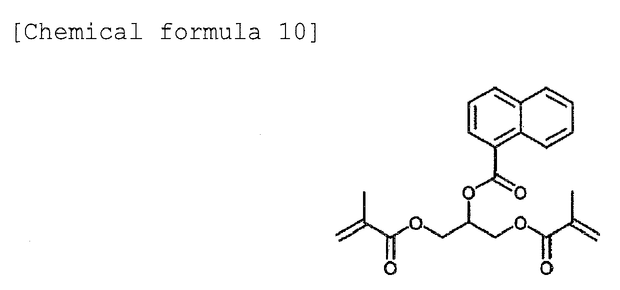

Furthermore, as shown above, the compound that X is a phenyl benzoyl skeleton in the formula (3), namely the aromatic group-containing (meth) acrylate compound represented by formula (6) (hereinafter sometimes referred to aromatic group-containing (meth)acrylate compound (2)) is also particularly preferred.

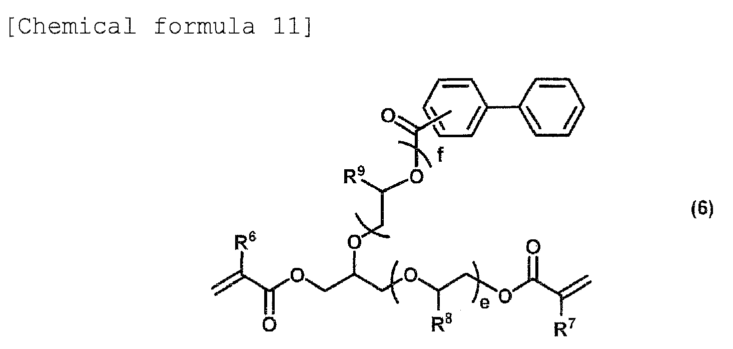

In the formula (6), each of R⁶, R⁷, R⁸ and R⁹ is hydrogen or a methyl group independently, and each of e and f is an integer of 0 to 3 independently. When e is 2 or more, plural R⁸s may be the same or different each other. When f is 2 or more, plural R⁹s may be the same or different each other.

In the formula (6), R⁶, R⁷, R⁸ and R⁹ are preferably methyl groups from the viewpoint of improving the heat resistance of a resulting cured product.

In the formula (6), each of e and f is preferably 0 or 1 independently, more preferably 0 from the viewpoint of improving the heat resistance of a resulting cured product and easiness of acquisition of the raw materials.

In the formula (6), the carbonyl group in the phenylbenzoyl group is preferably bonded at a 4-position of biphenyl from the viewpoint of easiness of acquisition of the raw materials.

Namely, the compound having the following structure is particularly preferred.

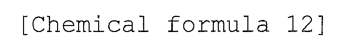

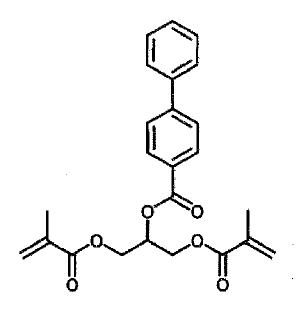

It is preferred to use a compound represented by the following formula (4) as the reactive (meth)acrylate (c) from the viewpoints of the heat resistance of a cured product prepared from the curable composition of the present invention and decreasing the Abbe's number of the composition.

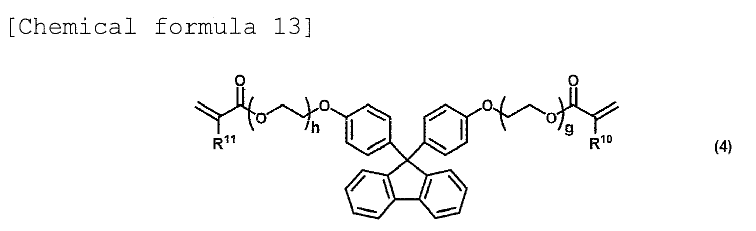

In the formula (4), each of R¹⁰ and R¹¹ is hydrogen or a methyl group independently, and each of g and h is an integer of 0 to 3 independently.

In the formula (4), R¹⁰ and R¹¹ are preferably hydrogen atoms from the viewpoint of easiness of acquisition of the raw materials.

In the formula (4), each of g and h is preferably 0 or 1 independently, more preferably 1 from the viewpoint of easiness of acquisition of the raw materials.

In the reactive (meth)acrylates (c), examples of the compound represented by the formula (4) are 9,9-bis[4-((meth)acryloyl)oxyphenyl]fluorene, 9,9-bis[4-(2-(meth)acryloyl)oxyethoxy]phenyl]fluorene, 9,9-bis[4-(2-(meth)acryloyl)oxyethoxyethoxy]phenyl] fluorene, and Trade Names OGSOL EA-0200, EA-1000, EA-F5003 and EA-F5503 manufactured by Osaka Gas Chemicals Co., Ltd.

As the reactive (meth) acrylates (c), various compounds can be used in addition to the compounds represented by the formulas (3) and (4). Examples thereof are 2,2-bis((meth)acryloxy phenyl)propane, 2,2-bis[4-(3-(meth)acryloxy)-2-hydroxypropoxy phenyl]propane, 2,2-bis(4-(meth)acryloxy ethoxyphenyl)propane, 2,2-bis(4-(meth)acryloxy diethoxy phenyl)propane, 2,2-bis(4-(meth)acryloxy triethoxy phenyl)propane, 2,2-bis(4-(meth)acryloxy tetraethoxy phenyl)propane, 2,2-bis(4-(meth)acryloxy pentaethoxy phenyl)propane, 2,2-bis(4-(meth)acryloxy dipropoxy phenyl)propane, 2(4-(meth)acryloxy ethoxy phenyl)-2(4-(meth)acryloxy diethoxy phenyl)propane, 2 (4- (meth) acryloxy diethoxy phenyl) -2 (4- (meth) acryloxy diethoxy phenyl)propane, 2(4-(meth)acryloxy dipropoxy phenyl)-2(4-(meth)acryloxy triethoxy phenyl)propane, 2,2-bis(4-(meth)acryloxy propoxy phenyl)propane, 9,9-bis[4-(2-(meth)acryloyloxy propoxy)phenyl]fluorene, 9,9-bis[4-(2-(meth)acryloyloxypropoxypropoxy)phenyl]fluorene, 9,9-bis[4-(3-(meth)acryloyl oxy propoxy)phenyl]fluorene and 9,9-bis[4-(4-(meth)acryloyl oxy buthoxy)phenyl]fluorene.

The reactive (meth) acrylate (c) described above may be used singly and two or more may be combined for use.

As the reactive (meth)acrylate (c), a (meth)acrylate compound having a homopolymer glass transition temperature of not lower than 80° C is preferred from the viewpoint of the heat resistance of a cured product obtainable by curing the curable composition of the present invention. The method for measuring the homopolymer glass transition temperature is the same as above. The homopolymer glass transition temperature is usually not higher than 300° C.

Among the (meth)acrylate compounds described above, from the viewpoints of the low Abbe's number and the heat resistance of a resulting cured product, preferred are the (meth)acrylate compound represented by the formula (3), the (meth)acrylate compound represented by the formula (4), 2,2-bis((meth)acryloxy phenyl)propane, 2,2-bis(4-(meth)acryloxyethoxy phenyl)propane, 2,2-bis(4-(meth)acryloxydiethoxy phenyl)propane, 9,9-bis[4-((meth)acryloyl oxy)phenyl]fluorene, 9,9-bis[4-(2-(meth)acryloyl oxyethoxy)phenyl]fluorene, and OGSOL EA-F5003 and EA-F5503 manufactured by Osaka Gas Chemicals Co., Ltd. More preferred are the (meth)acrylate compound represented by the formula (5), the (meth)acrylate compound represented by the formula (6), 9,9-bis[4-((meth)aryloyl oxy)phenyl]fluorene, 9,9-bis[4-(2-(meth)aryloyl oxyethoxy)phenyl]fluorene and OGSOL EA-5503 manufactured by Osaka Gas Chemicals Co., Ltd.

The reactive (meth)acrylate (c) of the present invention is used in an amount of preferably 5 to 400 parts by mass based on 100 parts by mass of the silica fine particles (a) prepared before the surface treatment. From the viewpoints of the viscosity of the curable composition, the dispersion stability of the silica fine particles (a) in the curable composition, the heat resistance of a cured product and decreasing the Abbe's number of the cured product, it is used in an amount of more preferably 10 to 200 parts by mass, furthermore preferably 20 to 150 parts by mass. When the amount is less than 5 parts by mass, the Abbe's number is sometimes not sufficiently decreased. When the amount is over 400 parts by mass, the resulting cured product is occasionally colored.

### Polymerization initiator (d)

Examples of the polymerization initiator (d) used in the present invention are a photo-polymerization initiator, which generates radicals, and a thermal polymerization initiator.

Examples of the photo-polymerization initiator are benzophenone, benzoin methyl ether, benzoin propyl ether, diethoxy acetophenone, 1-hydroxy-phenyl phenyl ketone, 2,6-dimethylbenzoyl diphenyl phosphine oxide, 2,4,6-trimethyl benzoyl diphenyl phosphine oxide and diphenyl-(2,4,6-trimethyl benzoyl) phosphine oxide. These photo-polymerization initiators may be used singly or two or more may be used simultaneously.

The content of the photo-polymerization initiator in the curable composition is an amount capable of properly curing the curable composition, preferably 0.01 to 10 % by mass, more preferably 0.02 to 5 % by mass, furthermore preferably 0.1 to 2% by mass based on 100% by mass of the curable composition. When the content of the photo-polymerization initiator is too large, the storage stability of the curable composition is decreased, the resulting cured product is colored, crosslinking suddenly proceeds in preparing the cured product by crosslinking to cause cracks and the like at the time of curing. When the content of the photo-polymerization initiator is too small, the curable composition is hardly cured sufficiently.

Examples of the thermal polymerization initiator are benzoyl peroxide, diisopropyl peroxy carbonate, t-butylperoxy(2-ethylhexanoate), t-butylperoxy neodecanoate, t-hexyl peroxypivalate and 1,1,3,3-tetramethylbutyl peroxy-2-ethylhexanoate.

The content of the thermal polymerization initiator in the curable composition is preferably not more than 2 % by mass based on 100 % by mass of the curable composition.

### Reactive (meth)acrylate (g)

The curable composition of the present invention may comprise a (meth)acrylate compound (g) having one ethylenic unsaturated group and an alicyclic structure and/or an aromatic ring structure in addition to the above components. The reactive (meth)acrylate (g) is used in order to give the heat resistance to the cured product and to decrease the shrinkage of the curable composition at the time of curing.

The alicyclic structure is a structure such that carbon atoms are bonded in a cyclic form without an aromatic ring structure. The aromatic ring is described in the reactive (meth)acrylate (c).

Preferable examples of the reactive (meth)acrylate (g) are cycloalkyl (meth)acrylates such as cyclohexyl (meth)acrylate, 4-butylcyclohexyl (meth)acrylate, dicyclopentanyl (meth)acrylate, dicyclopentenyl (meth)acrylate, dicyclopentadienyl (meth)acrylate, bornyl(meth)acrylate, isobornyl (meth)acrylate, tricyclodecanyl (meth)acrylate, tricyclodecane dimethanol diacrylate and admantyl (meth)acrylate; and aromatic (meth)acrylates such as benzyl (meth)acrylate, phenyl (meth)acrylate, o-tolyl (meth)acrylate, m-tolyl (meth)acrylate, phenetyl (meth)acrylate, phenoxypropyl (meth)acrylate, o-tolyloxyethyl (meth)acrylate, m-tolyloxyethyl (meth)acrylate, o-biphenyloxyethyl (meth)acrylate, o-biphenyloxyethoxyethyl (meth)acrylate, m-biphenyloxyethyl (meth)acrylate and naphthoxyethyl (meth)acrylate.

From the viewpoints of the heat resistance of a cured product, a (meth)acrylate compound having a homopolymer glass transition temperature of not lower than 80° C is preferred as the reactive (meth)acrylate (g). The method of measuring the homopolymer glass transition temperature is the same as above. The homopolymer glass transition temperature is usually not higher than 300° C.

Among the above (meth) acrylates, from the viewpoints of the transparency and heat resistance of the cured product, dicyclopentanyl (meth)acrylate, admantyl (meth)acrylate and benzyl(meth)acrylate are preferred, and further admantyl (meth)acrylate and benzyl(meth)acrylate both having a high homopolymer glass transition temperature are most preferred.

The amount of the (meth)acrylate (g) used in the present invention is preferably 5 to 400 parts by mass based on 100 parts by mass of the silica fine particles (a) prepared before the surface treatment. From the viewpoints of the viscosity of the curable composition, the dispersion stability of the silica fine particles (a) in the curable composition and the heat resistance of the cured product, it is more preferably 10 to 200 parts by mass, furthermore preferably 10 to 100 parts by mass. When the amount is less than 5 parts by mass, the viscosity of the curable composition is increased to cause gelation. When it is over 400 parts by mass, cracks are caused in the cured product or the heat resistance of the cured product is decreased.

The curable composition of the present invention may optionally contain a polymerization inhibitor, a leveling agent, an antioxidant, an ultraviolet ray absorber, a light stabilizer, a solvent, a pigment, other fillers such as an inorganic filler and the like, a reactive diluent and other modifying agents within not marring the viscosity of the composition, and the transparency and heat resistance of the cured product.

The polymerization inhibitor is used to prevent the components contained in the curable composition during the storage from occurrence of polymerization reaction. Examples of the polymerization inhibitor are hydroquinone, hydroquinone monomethylether, benzoquinone, p-t-butyl catechol and 2,6-di-t-butyl-4-methylphenol.

The amount of the polymerization inhibitor used is preferably not more than 0.1 part by mass based on 100 parts by mass of the curable composition from the viewpoint of the transparency of the curable composition and the heat resistance of the cured product.

The polymerization inhibitors may be used singly or two or more may be combined for use.

Examples of the leveling agent are a polyether modified dimethyl polysiloxane copolymerization product, a polyester modified dimethyl polysiloxane copolymerization product, a polyether modified methyl alkyl polysiloxane copolymerization product, an aralkyl modified methyl alkyl polysiloxane copolymerization product and a polyether modified methyl alkyl polysiloxane copolymerization product.

The leveling agents may be used singly or two or more may be combined for use.

The antioxidant is a compound having a function of capturing oxidation-accelerating factors such as free radicals and the like.

The antioxidant is not particularly limited as long as it is usually used in industry. Examples thereof are a phenol antioxidant, a phosphorus antioxidant and a sulfur antioxidant.

These antioxidants may be used singly or two or more may be combined for use.

Examples of phenol antioxidant are:
Irganox 1010 (pentaerythritol tetrakis[3-(3,5-di-t-butyl-4-hydroxyphenyl)propionate], manufactured by Ciba Specialty Chemicals),
Irganox 1076 (octadecyl-3-(3,5-di-t-butyl-4-hydroxyphenyl)propionate, manufactured by Ciba Specialty Chemicals),
Irganox 1330 (3,3',3",5,5',5"-hexa-t-butyl-a,a',a"-(mesithylene-2,4-6-tolyl)tri-p-cresol, manufactured by Ciba Specialty Chemicals),
Irganox 3114 (1,3,5-tris(3,5-di-t-butyl-4-hydroxybenzyl-1,3,5-triazine-2,4,6(1H,3H,5H)-trione, manufactured by Ciba Specialty Chemicals),
Irganox 3790 (1,3,5-tris((4-t-butyl-3-hydroxy-2,6-xylyl)methyl)-1,3,5-triazine-2,4,6(1H,3H,5H)-trione, manufactured by Ciba Specialty Chemicals),
Irganox 1035 thiodiethylene bis[3-(3,5-di-tert-butyl-4-hydroxyphenyl)propionate], manufactured by Ciba Specialty Chemicals),
Irganox 1135 (benzene propanic acid, 3,5-1,1-dimethylethyl)-4-hydroxy, C7-C9 side chain alkyl ester, manufactured by Ciba Specialty Chemicals),
Irganox 1520L (4,6-bis(octylthiomethyl)-o-cresol, manufactured by Ciba Specialty Chemicals),
Irganox 3125 (manufactured by Ciba Specialty Chemicals),
ADEKASTAB AO-80 (3,9-bis(2-(3-(3-t-butyl-4-hydroxy-5-methylphenyl)propionyloxy)-1,1-dimethylethyl-2,4,8,10-tetraoxaspiro(5,5)undecane, manufactured by ADEKA),
Sumilizer-BHT (manufactured by Sumitomo Chemicals),
Sumilizer-GA-80 (manufactured by Sumitomo Chemicals),
Cyanox 1790 (manufactured by Saitech) and
vitamin E (manufactured by Eisai).

Examples of the phosphorus antioxidant are Irgafos 168 (tris(2,4-di-t-butylphenyl)phosphate, manufactured by Ciba Specialty Chemicals),
Irgafos 12 (tris[2-[[2,4,8,10-tetra-t-butyldibenzo [d,f][1,3,2]dioxaphosphephine-6-yl]oxy]ethyl]amine, manufactured by Ciba Specialty Chemicals),
Irgafos 38 bis(2,4-bis(1,1-dimethylethyl)-6-methylphenyl)ethyl phosphite, manufactured by Ciba Specialty Chemicals),
ADEKASTAB 329K (manufactured by ADEKA Corporation),
ADEKASTAB PEP36 (manufactured by ADEKA Corporation),
ADEKASTAB PEP-8 (manufactured by ADEKA Corporation),
Sandstab P-EPQ (manufactured by Cryant Corporation),
Weston 618 (manufactured by GE Corporation),
Weston 619G (manufactured by GE Corporation),
Ultranox 626 (manufactured by GE Corporation) and
Sumilizer GP (6-[3-(3-tert-butyl-4-hydroxy-5-methylphenylpropoxy)2,4,8,10-tetra-tert-butyldibenz[d,f][1,3, 2]dioxaphosphephine, manufactured by Sumitomo Chemical).

Examples of the sulfur antioxidant are dialkyl thiodipropionate compounds such as dilauryl thiodipropionate dimyristyl and distrearyl; and β-alkyl mercapto propionate compounds of polyol such as tetrakis[methylene(3-dodecylthio) propionate]methane and the like.

The ultraviolet ray absorbent is a compound capable of absorbing an ultraviolet ray having a wavelength of about 200 to 380 nm, changing into heat or an infrared ray and liberating.

The ultraviolet ray absorbent is not particularly limited as long as it is usually used in industry. It is possible to use benzotriazole, triazine, diphenylmethane, 2-cyanopropenic acid ester, salicylic acid ester, anthranilate, cinnamic acid derivative, camphor derivative, resorcinol, oxalinide and coumalin ultraviolet ray absorbents.

These ultraviolet absorbents may be used singly or two or more may be combined for use.

Examples of the benzotriazole ultraviolet ray absorbents are 2,2-methylene bis[4-(1,1,3,3-tetramethylbutyl)-6[(2H-benzotriazole-2-yl)phenol]], 2-(2H-benzotriazol-2-yl)-4-(1,1,3,3-tetramethylbutyl)phenol and 2-[5-chloro(2H)-benzotriazole-2-yl]-4-methyl-6-(tert-butyl)phenol.

Examples of the triazine ultraviolet ray absorbents are 2-(4,6-diphenyl-1,3,5-triazine-2-yl)-5-[(hexyl)oxy]-phenol, 2,4,6-tris-(diisobutyl-4'-amino-benzalmalonate)-s-triazine, 4,6-tris(2-hydroxy-4-octyloxyphenyl)-1,3,5-triazine, 2-(2-hydroxy-4-octyloxyphenyl)-4,6-bis(2,4-dimethylphenyl)-1, 3,5-triazine, 2-(2,4-dihydroxyphenyl)-4,6-bis(2,4-dimethylphenyl)-1,3,5-tri azine, 2,4-bis(2-hydroxy-4-propyloxyphenyl)-6-(2,4-dimethylphenyl)-1 ,3,5-triazine and 2-(2-hydroxy-4-dodecyloxyphenyl)-4,6-bis(2,4-dimethylphenyl)-1,3,5-triazine.

Examples of the diphenylmethane ultraviolet ray absorbents are diphenylmethanone, methyl diphenylmethanone, 4-hydroxy diphenylmethanone, 4-methoxy diphenylmethanone, 4-octoxy diphenylmethanone, 4-decyloxy diphenylmethanone, 4-dodecyloxy diphenylmethanone, 4-benzyloxy diphenylmethanone, 4,2',4'-trihydroxy diphenylmethanone, 2'-hydroxy-4,4'-dimethoxy diphenylmethanone, 4-(2-ethylhexyloxy)-2-hydroxy-diphenylmethanone, o-benzoyl methyl benzoate and benzoinethyl ether.

Examples of the 2-cyano propenate ultraviolet ray absorbents are ethyl-a-cyano-β,β'-diphenyl propenate and isooctyl-a-cyano-β,β'-diphenylpropenate.

Examples of the salicylate ultraviolet ray absorbents are isocetyl salicylate, octyl salicylate, glycol salicylate and phenyl salicylate.

Examples of the anthranilate ultraviolet ray absorbents are menthyl anthranilate and the like.

Examples of the cinnanic acid derivative ultraviolet ray absorbents are ethylhexyl methoxy cinnamate, isopropylc methoxy cinnamate, isoamyl methoxy cinnamate, diisopropyl methyl cinnamate, glyceryl-ethyl hexanoate dimethoxy cinnamate, methyl-a-carbomethoxy cinnamate and methyl-a-cyano-β-methyl-p-methoxy cinnamate.

The camphor derivative ultraviolet ray absorbents are benzylidene campher, benzilydene campher sulfonic acid, campher benzalconium methosulphate, terephthalidene dicampher sulfonic acid and polyacrylamide methyl benzylidene campher.

Examples of the resorcinol ultraviolet ray absorbents are dibenzoyl resorcinol and bis(4-tert-butylbenzoyl resorcinol.

Examples of the oxalinide ultraviolet ray absorbents are 4,4'-di-octyloxy oxalinide, 2,2'-diethoxyoxy oxalinide, 2,2'-di-octyloxy-5,5'-di-tert-butyl oxalinide, 2,2'-di-dodecyloxy-5,5'-di-tert-butyl oxalinide, 2-ethoxy-2'-ethyl oxalinide, N,N'-bis(3-dimethyl aminopropyl) oxalinide, 2-ethoxy-5-tert-butyl-2'-ethoxy oxalinide.

Examples of the coumalin derivative ultraviolet ray absorbents are 7-hydroxy coumalin and the like.

The light stabilizer is a compound having a function of decreasing auto-oxidation and decomposition caused by radicals generated with light energy and restraining deterioration of resins.

The light stabilizer is not particularly limited as long as it is usually used in industry. It is possible to use a hindered amine compound (referred to "HALS"), a benzophenone compound and a benzotriazole compound.

These light stabilizers may be used singly or two or more may be combined for use.

Examples of HALS are HALS having a high molecular weight and plural piperidine rings bonded through a triazine skeleton such as a polycondensation product of N,N',N",N'"-tetrakis-(4,6-bis-(butyl-(N-methyl-2,2,6,6-tetramethylpyperidine-4-yl)amino)-triazine-2-yl)-4,7-diazadec ane-1,10-diamine, dibutylamine, 1,3,5-triazine and N,N'-bis(2,2,6,6- tetramethyl-4- pyperidyl)butylamine, poly[{(1,1,3,3-tetramethylbutyl)amino-1,3,5-triazine-2,4-diyl}{(2,2,6,6-tetramethyl-4-piperidyl)imino}hexamethylen e{(2,2,6,6-tetramethyl-4-piperidyl)imino}], a polycondensation product of 1,6-hxanediamine-N,N'-bis(2,2,6,6-tetramethyl-4-piperidyl) and morphorine-2,4,6-trichloro-1,3,5-triadine, poly(6-morphorino-s-triazine-2,4-diyl)[(2,2,6,6-tetramethyl-4 -piperidyl)imino]-hexamethylene[(2,2,6,6-tetramethyl-4-piperi dyl)imino;
HALS having a high molecular weight and a piperidine ring bonded through ester bonding such as a polymerization product of dimethyl succinate, and 4-hydroxy-2,2,6,6-tetramethyl-1-piperidine ethanol, a mixed esterified product of 1,2,3,4-butane tetracarboxylic acid, 1,2,2,6,6-pentamethyl-4-piperidinol and 3,9-bis (2-hydroxy-1,1-dimethylethyl)-2,4,8,10-tetraoxaspiro[5,5] undecane; and pentamethylpiperidinyl methacrylate.

As the other components, the curable composition of the present invention may further contain the solvent. Blending the solvent, the dispersibility of each component of the curable composition is improved.

Examples of the solvent used in the curable composition of the present invention are
esters such as ethyl acetate, butyl acetate and isopropyl acetate;
ketones such as acetone, methylethyl ketone, methyl isobutyl ketone and cyclohexanone; cyclic ethers such as tetrahydrofurane and dioxane;
amides such as N,N-dimethylformamide and the like;
aromatic hydrocarbons such as toluene and the like;
halogenated hydrocarbons such as methylene chloride and the like;
ethylene glycols such as ethylene glycol, ethylene glycol methylether, ethylene glycol mono-n-propylether, ethylene glycol monomethyl ether acetate, diethylene glycol, diethylene glycol monomethylether, diethylene glycol monoethylether and diethylene glycol monoethylether acetate;
propylene glycols such as propylene glycol, propylene glycolmethylether, propylene glycolethylether, propyleneglycol butylether, propylene glycol propylether, propylene glycolmonomethylether acetate, dipropylene glycol, dipropyleneglycol monomethylether, dipropylene glycol monoethylether and dipropylene glycol monomethylether acetate; and acetonitrile. Preferable examples are ethyl acetate, methylethyl ketone, cyclohexanone, toluene, dichloromethane, diethylene glycol monomethylether and propylene glycol monomethylether acetate.

The solvents may be used singly or two or more may be combined for use.

The amount of the solvent used herein is not particularly limited, and is usually 50 to 200 parts by mass, preferably 50 to 100 parts by mass based on 100 parts by mass of the total components of the curable composition excluding the solvent.

Examples of the filler and the pigment are calcium carbonate, talc, mica, clay, Aerozyl (Trade Mark), barium sulfate, aluminum hydroxide, zinc stearate, zinc white, red iron oxide and an azo pigment.

The curable composition containing such various components has a viscosity at 25° C, as measured by a B type viscometer DV-III ULTRA (manufactured by BROOKFIELD Corporation), of usually 30 to 10,000 mPa · s, preferably 100 to 8,000 mPa · s. The curable composition of the present invention has a proper viscosity even if it does not contain the solvent, and good handling properties. The properties are caused by high compatibility of the surface treated silica fine particles (a) with the reactive (meth) acrylate (b), the reactive (meth)acrylate (c) and the reactive (meth) acrylate (g), and by high dispersion stability of the silica fine particles (a) in the reactive (meth)acrylate (b), the reactive (meth)acrylate (c) and the reactive (meth)acrylate (g).

### Production process for Curable composition

The curable composition of the present invention can be produced by a step (step 1) of surface treating colloidal silica dispersed in the organic solvent (the silica fine particles (a)) with the silane compounds (e) and (f), a step (step 2) of adding the reactive (meth) acrylate (b), the reactive (meth) acrylate (c) and optionally the reactive (meth)acrylate (g) to the surface treated silica fine particles (a) and uniformly mixing, a step (step 3) of distilling the organic solvent and water, and removing the solvent from the uniform mixed solution of the silica fine particles (a), the reactive (meth)acrylate (b), the reactive (meth)acrylate (c) (and the reactive (meth)acrylate (g)) prepared in the step 2 and a step (step 4) of adding the polymerization initiator (d) to the composition prepared by removing the solvent in the step 3, and uniformly mixing and thereby preparing the curable composition. Each step will be described below.

### Step 1

In the step 1, the silica fine particles (a) are surface treated with the silane compounds (e) and (f). The surface treatment is carried out by introducing the silica fine particles (a) into a reactor, adding the silane compounds (e) and (f) with stirring and mixing with stirring, adding water and the catalyst which are necessary for hydrolyzing of the silane compounds to the mixture and hydrolyzing the silane compounds with stirring, and carrying out condensation polymerization on the surfaces of the silica fine particles (a). As described above, silica fine particles dispersed in the organic solvent are preferably used as the silica fine particles (a).

The quenching of the silane compounds by hydrolysis can be confirmed by a gas chromatography. The residual amount of the silane compounds can be measured by a gas chromatography (manufactured by Agilent, Model 6850) using a nonpolar column DB-1 (manufactured by J&W) at a temperature of 50 to 300 ° C at a temperature elevating rate of 10 ° C/min, using He as a carrier gas at a flow rate of 1.2 cc/min and using a hydrogen flame ionization detector by an internal standard method. The quenching of the silane compounds by hydrolysis can be confirmed by measuring the residual amount.

In the surface treatment of the silica fine particles (a), the silane compound (e) is used in an amount of usually 5 to 40 parts by mass, preferably 10 to 30 parts by mass based on 100 parts by mass of the silica fine particles (a). The silane compound (f) is used in an amount of usually 5 to 40 parts by mass, preferably 10 to 30 parts by mass based on 100 parts by mass of the silica fine particles (a).

The lower limit of the amount of water necessary for carrying out the hydrolysis reaction is one time as much as the total mole number of an alkoxy group and a hydroxyl group bonded to the silane compounds (e) and (f), and the upper limit is 10 times. When the water amount is too small, the hydrolysis decomposition rate is extremely slow and thereby the economic properties are deteriorated or the surface treatment does not sufficiently proceed. On the other hand, when the water amount is too large, the silica fine particles (a) likely cause gelation.

In carrying out the hydrolysis decomposition reaction, a catalyst for the hydrolysis decomposition reaction is usually used. Examples of the catalyst are inorganic acids such as hydrochloric acid, acetic acid, sulfuric acid and phosphoric acid; organic acids such as formic acid, propionic acid, oxalic acid, paratoluene sulfonic acid, benzoic acid, phthalic acid and maleic acid; alkali catalysts such as potassium hydroxide, sodium hydroxide, calcium hydroxide and ammonium; organic metals; meal alkoxides; organic tin compounds such as dibutyl tin dilaurate, dibutyl tin dioctylate, dibutyl tin diacetate; metal chelate compounds such as aluminum tris(acetylacetonate), titanium tetrakis(acetyl acetonate), titanium bis(butoxy)bis(acetyl acetonate), titanium bis (isopropoxy) bis (acetyl acetonate), zirconium bis(butoxy) bis(acetylacetonate) and zirconium bis(isopropoxy)bis(acetyl acetonate); and boron compounds such as boron butoxide and boric acid.

Among these catalysts, hydrochloric acid, acetic acid, maleic acid and boron compound are preferred from the viewpoints of attaining solubility in water and a sufficient hydrolysis rate. These catalysts may be used singly, or two or more may be combined for use.

In carrying out the hydrolysis reaction of the silane compounds (e) and (f) in the step 1, although a water insoluble catalyst may be used, it is preferred to use a water-soluble catalyst. When the water-soluble catalyst for the hydrolysis reaction is used, it is preferred that a proper amount of the water soluble catalyst is dissolved in water and added to the reaction system because the catalyst can be dispersed uniformly.

The amount of the catalyst used for the hydrolysis reaction is not particularly limited, and is usually 0.1 to 10 parts by mass, preferably 0.5 to 5 parts by mass based on 100 parts by mass of the silica fine particles (a). When the silica fine particles dispersed in the organic solvent is used as the silica fine particles (a) as described above, the mass of the silica fine particles (a) indicates the mass of only the silica fine particles in the organic solvent. Furthermore, in the present invention, the catalyst is optionally used in a state that it is dissolved in water for the hydrolysis reaction. In this case, the amount of the catalyst added indicates the amount as a whole water solution.

The reaction temperature in the hydrolysis reaction is not particularly limited, and is usually 10 to 80 ° C, preferably 20 to 50 ° C. When the reaction temperature is too low, the hydrolysis reaction rate is extremely slow and thereby the economic properties are deteriorated or the surface treatment does not sufficiently proceed. On the other hand, when the reaction temperature is too high, gelation reaction is easily caused.

The reaction time for the hydrolysis reaction is not particularly limited, and is usually 10 min to 48 hr, preferably 30 min to 24 hr.

In the step 1, the surface treatments with the silane compound (e) and the silane compound (f) are preferably carried out simultaneously in one step from the viewpoints of simplification of the reaction process and efficiency although they may be carried out one after another.

### Step 2

In the step 2, the process of mixing the surface treated silica fine particles (a), the reactive (meth)acrylate (b), the reactive (meth)acrylate (c) and optionally the reactive (meth) acrylate (g) is not particularly limited. Examples of the mixing process are a process of mixing by a mixing machine such as a mixer, a ball mill or a three-roll mill at a room temperature under heating, and a process of adding the reactive (meth) acrylate (b), the reactive (meth)acrylate (c) (and the reactive (meth) acrylate (g)) continuously in the reactor used in the step 1 and mixing with stirring.

### Step 3

In the step 3, in order to distill off and removing the organic solvent and water (hereinafter referred to "removing the solvent") from the uniform mixed solution of the silica fine particles (a), the reactive (meth)acrylate (b), the reactive (meth)acrylate (c) and (the reactive (meth)acrylate (g)), it is preferred to heat in a reduced pressure.

The temperature is preferably kept to be 20 to 100°C, and from the viewpoint of a balance between prevention against aggregation and gelation and the rate of removing the solvent, it is more preferably 30 to 70°C, furthermore preferably 30 to 50°C. When the temperature is increased, the fluidity of the curable composition is lowered extremely or the curable composition is in a gel state.

In reducing the pressure, the degree of vacuum is usually 10 to 4,000 kPa. From the viewpoint of the balance between the rate of removing the solvent and prevention against aggregation and gelation, it is furthermore preferably 10 to 1,000 kPa, most preferably 10 to 500 kPa. When the degree of the vacuum is too large, the rate of removing the solvent is extremely slow and thereby it is uneconomical.

It is preferred that the composition prepared after the removal of the solvent does not contain the solvent substantially. The term such that it does not substantially contain the solvent means that there is no need of a step of removing the solvent again in preparing the cured product using the curable composition of the present invention practically. Specifically, the residual amounts of the organic solvent and water in the curable composition are preferably not more than 1 % by mass, more preferably not more than 0.5 % by mass, furthermore preferably not more than 0.1 % by mass.

In the step 3, before the removal of the solvent, not more than 0.1 part by mass of the polymerization inhibitor may be added based on 100 parts by mass of the composition prepared after the removal of the solvent. The polymerization inhibitor can be used for preventing the components contained in the composition from occurrence of polymerization reaction during removing the solvent, during storage of the composition after the removal of the solvent and during storage of the curable composition.

The step 3 is carried out by transferring the uniform mixed solution of the silica fine particles (a), the reactive (meth)acrylate (b), the reactive (meth)acrylate (c) and (the reactive (meth)acrylate (g)) passed through the step 2 into a special device. If the step 2 is carried out using the reactor of the step 1, the step 3 can be carried out using the same reactor following the step 2.

### Step 4

In the step 4, the process of adding the polymerization initiator (d) to the solvent-removed composition and uniformly mixing is not particularly limited. Examples of the mixing process are a process of mixing by a mixing device such as a mixer, a ball mill or a three roll mill at room temperature and a process of adding and mixing the polymerization initiator (d) with stirring continuously in the reactor used in the steps 1 to 3.

The curable composition prepared by adding and mixing the polymerization initiator (d) may be optionally subjected to filtration. The filtration is carried out in order to remove foreign matters such as dust and the like contained in the curable composition. The filtration process is not particularly limited. It is preferred to employ a process of filtering with pressure by a membrane type or a cartridge filter having a pressure filtrating hole diameter of 1.0 µm.

The curable composition of the present invention prepared in the above way is made into a cured product by curing, which product is used to optical materials such as optical lenses, optical disc substrates, plastic substrates for liquid crystal display elements, substrates for color filters, plastic substrates for organic EL display elements, solar battery substrates, touch panels, optical elements, light waveguides LED and sealing materials.

### Production process for cured product

The curable composition of the present invention is cured to prepare a cured product. Examples of the method of curing are a method of crosslinking the ethylenic unsaturated groups by irradiation with an active energy ray, a method of thermally polymerizing the ethylenic unsaturated groups with heating, and a method of combining the above methods.

In the case of curing the curable composition by an active energy ray such as ultraviolet ray or the like, the photo-polymerization initiator is contained in the curable composition in the step 4.

In the case of curing the curable composition with heating, the thermal polymerization initiator is contained in the curable composition in the step 4.

The cured product of the present invention is obtainable by applying the curable composition of the present invention on a substrate such as a glass plate, a plastic plate, a metal plate or a silicon wafer and thereby forming a coating film, and irradiating the curable composition with an active energy ray or heating. For curing, both of irradiating with an active energy ray and heating may be carried out.

Examples of the method of applying the curable composition are application with a bar coater, an applicator, a die coater, a spin coater, a spray coater, a curtain coater or a roll coater, application with screen printing and application with dipping.

The amount of the curable composition coated on the substrate according to the present invention is not particularly limited and can be regulated appropriately in accordance with the object. The coating amount is such an amount that the film thickness of the coated film prepared after the curing treatment with active energy ray irradiation and/or heating is preferably 1 to 1,000 µm, more preferably 10 to 800 µm.

Preferable examples of the active energy ray used for curing are an electron ray and a light in the range of from an ultraviolet ray to an infrared ray.

Examples of a light source are an ultrahigh pressure mercury light source or a metal halide light source as an ultraviolet ray; a metal halide light source or a halogen light source as a visible light source; and a halogen light source as an infrared ray. In addition to the above light sources, it is possible to use a leaser, LED and other light sources.

The exposed dose of the active energy ray is appropriately determined in accordance with the kind of the light source and the film thickness of the coating film. When the curable composition comprises the reactive (meth)acrylate (b), the reactive (meth)acrylate (c) and optionally the reactive (meth)acrylate (g), the exposed dose is properly determined so that the degree of the reaction of the ethylenic unsaturated groups is not less than 80%, preferably not less than 90%. The degree of the reaction is determined by an infrared absorption spectrum from the change in the absorption peak intensity of the ethylenic unsaturated groups before and after the reaction.

After curing by irradiation with an active energy ray, curing may be further proceeded by heat treatment (annealing treatment). In the annealing treatment, the heating temperature is preferably 80 to 220°C. The heating time is 10 min to 60 min.

When the thermal polymerization is carried out by heat treatment in order to cure the curable composition of the present invention, the heating temperature is preferably 80 to 200°C, more preferably 100 to 150°C. When the heating temperature is lower than 80°C, the heating time needs to be prolonged and thereby it is uneconomical. When the heating temperature is higher than 200°C, the energy cost is increased, and the temperature increasing for heating and the temperature decreasing take much time and thereby it is uneconomical.

The heating time is appropriately determined in accordance with the heating temperature and the film thickness of the coating film. When the curable composition comprises the reactive (meth)acrylate (b), the reactive (meth)acrylate (c) and optionally the reactive (meth)acrylate (g), the heating time is properly determined so that the degree of the reaction of the ethylenic unsaturated groups is not less than 80%, preferably not less than 90%. The degree of the reaction is determined by an infrared absorption spectrum from the change in the absorption peak intensity of the ethylenic unsaturated groups before and after the reaction.

### Cured product

Since the cured product of the present invention has excellent transparency, heat resistance and resistance to environment, it is favorably used to optical materials such as optical lenses, plastic substrates for liquid crystal display elements, substrates for color filters, plastic substrates for organic EL display elements, solar battery substrates, touch panels, optical elements, optical waveguides and LED sealing materials.

The refractive index of the cured product can be selected appropriately according to the use. Since the cured product of the present invention has excellent heat resistance, the change amount of the refractive index before and after the heat treatment at 270 ° C for 1 min three times is preferably not more than 0.007, more preferably not more than 0.005, furthermore preferably not more than 0.003. When the change amount of the refractive index before and after the heat treatment at 270 ° C for 1 min three times is over 0.007, the efficiency of using light changes by heating so that such a cured product having the refraction index is not preferable to the use that the light efficiency is important.

The cured product of the present invention has a low Abbe's number, of usually not more than 50, preferably not more than 45. Therefore, the combined use of the cured product of the present invention with a material having a high Abbe' s number, for example, methyl polymethacrylate resin can prepare an optical material having a low chromatic aberration. The Abbe's number is determined by the refractive indexes at wavelengths of 486 nm, 589 nm and 656 nm measured at 25° C. The cured product of the present invention has excellent heat resistance and thereby the change in the refractive index before and after heating is also small so that the change in the Abbe's number before and after heating is low.

Since the cured product of the present invention has excellent heat resistance, the temperature at which the reduction in weight is 5% in heating at a nitrogen atmosphere is usually not lower than 300 ° C, preferably not lower than 320 ° C, more preferably not lower than 350 ° C. When the temperature at which the reduction in weight is 5% in heating is lower than 300 ° C, for example, in the case of using the cured product for a substrate of an active matrix display element, warps or flexures and optionally cracks are likely caused in the production step.

The cured product of the present invention has excellent heat resistance because it is obtainable by curing the curable composition containing the reactive (meth)acrylate (b), the reactive (meth) acrylate (c) (and the reactive (meth) acrylate (g)) each having a high homopolymer glass transition temperature.

The cured product of the present invention has a high glass transition temperature. The glass transition temperature of the cured product is determined from the peak temperature of a loss tangent δ value in measuring at a frequency of 1 Hz using a dynamic viscoelasticity measuring method, and usually not lower than 150 ° C, preferably not lower than 160 ° C. When the cured product having a glass transition of lower than 150 ° C is used to a substrate for active matrix display elements, warps or flexures and optionally cracks are likely caused in the production step. The cured product has a glass transition temperature of usually not higher than 300 ° C.

Since the cured product of the present invention has excellent transparency, in the cured product having a cured film of 200 µm thick, the transmissivity of a light ray with a wavelength of 400 nm is not less than 80 %. Furthermore, since it has excellent heat resistance, the change in transmissivities a light ray with a wavelength of 400 nm before and after the heat treatment for 1 min at 270 ° C three times is usually not more than 5%. When the transmissivity of a light ray with a wavelength of 400 nm is lower than 80%, the efficiency of using light is decreased. Therefore, such a cured product is unfavorable to the use that the light efficiency is important. In the case that the change is over 5% in transmissivities of a light ray with a wavelength of 400 nm before and after the heat treatment for 1 min at 270 ° C three times, when a cured product having such a change of over 5% is used to a substrate for active matrix display elements, a coloring problem is likely caused during the production steps.

Furthermore, because of having excellent transparency, the cured product having a cured film of 200 µm, has an all light ray transmissivity of preferably not less than 85%. Moreover, because of having excellent heat resistance, the cured product has a change of usually not more than 5% in all light ray transmissivities before and after the heat treatment for 1 min at 270 ° C three times.

The cured product of the present invention has an absolute value of a coefficient of refractive index depending on temperature of not more than 10.0 x 10⁻⁵/° C, preferably not more than 9. 0 x 10⁻⁵/° C. It is unfavorable that a cured product having a coefficient of refractive index depending on temperature of over 10.0 x 10⁻⁵/° C is used for optical lenses or optical waveguides because when the temperature is changed in the use environment, the light focal length is shifted to lower the image accuracy or to lower the light transmission efficiency. As the material usually used for optical lenses and the like, there is a polycarbonate. Since the polycarbonate has an absolute value of a coefficient of refractive index depending on temperature of 10.7 x 10⁻⁵/° C, it has a large change to temperature.

The coefficient of refractive index depending on temperature is an inclination of straight line obtainable by plotting the refractive index of a light ray with a wavelength of 594 nm to temperature in measuring the refractive index of the cured product of the present invention by changing the temperature in a measuring temperature range of 30 to 60 ° C for each 5 ° C using MODEL 2010M PRISM COUPLER (manufactured by Metricon Co., Ltd.).

### EXAMPLE

Hereinafter, the present invention will be described with reference to the following examples and comparative examples, but they should not limit it.

### <Synthesis of Reactive (meth)acrylate (c)>

### Synthetic Example 1

### Acrylate compound (A-1)

In a reactor, 450 parts by weight of toluene (manufactured by Junsei Chemical Co., Ltd.), 90 parts by weight of glycerol acrylate methacrylate (1,3-substituent of glycerol manufactured by Shin-Nakamura Chemical Co., Ltd.) were added and then 80 parts by weight of 1-naphthoyl chloride (manufactured by Tokyo Kasei Kogyo Co., Ltd.) was gradually dropped to the reactor with cooling. Furthermore, to the resultant reaction solution, 43 parts by weight of triethylamine (manufactured by Tokyo Kasei Kogyo Co., Ltd.) was gradually dropped and stirred at room temperature.

After the passage time of about 15 hr, it was confirmed by a high performance liquid chromatography that glycerol acrylate methacrylate, which was the raw material, almost disappeared, and then pure water was added and the reaction was finished. Successively, the resultant reaction solution was extracted off by ethyl acetate and washed using saturated saline water twice. Further, it was dried by anhydrous sodium sulfate and concentrated under reduced pressure to prepare an acrylate compound (A-1).

### Synthetic Example 2

### Acrylate compound (A-2)

In a reactor, 450 parts by weight of toluene (manufactured by Junsei Chemical Co., Ltd.), 90 parts by weight of glycerol dimethacrylate (1,3-substituent of glycerol manufactured by Shin-Nakamura Chemical Co., Ltd.) were added and then 85 parts by weight of 4-phenyl benzoyl chloride (manufactured by Tokyo Kasei Kogyo Co., Ltd.) was gradually dropped to the reactor with cooling. Furthermore, to the resultant reaction solution, 40 parts by weight of triethylamine (manufactured by Tokyo Kasei Kogyo Co., Ltd.) was gradually dropped and stirred at room temperature.

After the passage time of about 15 hr, it was confirmed by a high performance liquid chromatography that glycerol dimethacrylate ,which was the raw material, almost disappeared, and then pure water was added and the reaction was finished. Successively, the resultant reaction solution was extracted off by ethyl acetate and washed using saturated saline water twice. Further, it was dried by anhydrous sodium sulfate and concentrated under reduced pressure to prepare a methacrylate compound (A-2).

### <Preparation of Curable composition>

### Example 1

### Curable composition (B-1)

To a separable flask, 100 parts by weight of isopropyl alcohol dispersed colloidal silica (silica content of 30 % by mass, an average particle diameter of 10 to 20 nm, Trade Mark SNOWTEX IPA-ST manufactured by Nissan Chemical Industries, Ltd.) was introduced, and 5.4 parts by mass of y-methacryloxy propyl trimethoxy silane and 3.6 parts by mass of phenyltrimethoxy silane were added and mixed with stirring. Furthermore, to the separable flask, 2.9 parts by mass of a 0.1825 % by mass HCL solution was added and stirred at 20 ° C for 24 hr to perform surface treatment of the silica fine particles.

It was confirmed by a gas chromatography (Model 6850 manufactured by Agilent Co., Ltd.) that the γ-methacryloxy propyl trimethoxy silane and phenyltrimethoxy silane disappeared by hydrolysis. The measurement was carried out using a nonpolar column DB-1 (manufactured by J&W Co., Ltd.) at a temperature of 50 to 300 ° C at a temperature elevating rate of 10 ° C/min using He as a carrier gas at a flow rate of 1.2 cc/min using a hydrogen flame ionization detector by an internal standard method. The phenyltrimethoxy silane and γ-methacryloxy propyl trimethoxy silane disappeared by 8 hr after adding the HCL solution.

Next, to the surface treated silica fine particles, 30 parts by mass of trimethylol propane triacrylate (Trade Name: Viscote#295, manufactured by Osaka Organic Chemical Industry Ltd. Tg of homopolymer > 250 ° C) and 25.7 parts by mass of the acrylate compound (A-1) synthesized in Synthetic Example 1 (Tg of homopolymer: 109 ° C) were added and mixed homogeneously. Thereafter, the mixed solution was heated at 40 ° C at 100 kPa under reduced pressure with stirring to remove volatile matters.

To 100 parts by mass of the resultant mother liquor, 1 part by mass of dipheyl-(2,4,6-trimethylbenzoyl)phosphine oxide (Trade Name: Lucirin TPO-L; manufactured by BASF Japan Co., Ltd.) was dissolved as a photopolymerization initiator. The resultant solution was filtered off using a membrane filter (hole diameter of 1.0 µm) by a pressure filtration (pressure 0.2 MPa) to prepare a curable composition (B-1).

### Example 2

### Curable composition (B-2)

The procedure of Example 1 was repeated except for using the methacrylate compound (A-2) synthesized in Synthetic Example 2 in place of the acrylate compound (A-1) to prepare a curable composition (B-2).

### Example 3

### Curable composition (B-3)

The procedure of Example 2 was repeated except for using t-butylperoxy(2-ethylhexanoate) (Trade Name: Perbutyl O anufactured by NOF corporation) as a thermal polymerization initiator in place of diphenyl(2,4,6-trimethylbenzoyl) phosphine oxide to prepare a curable composition (B-3).

### Example 4

### Curable composition (B-4)

To a separable flask, 100 parts by weight of isopropyl alcohol dispersed colloidal silica (silica content of 30 % by mass, an average particle diameter of 10 to 20 nm, Trade Name SNOWTEX IPA-ST manufactured by Nissan Chemical Industries, Ltd.) was introduced, and 9.0 parts by mass of γ-methacryloxy propyl trimethoxy silane and 6.0 parts by mass of phenyltrimethoxy silane were added and mixed with stirring. Furthermore, to the separable flask, 2.9 parts by mass of a 0.1825 % by mass HCL solution was added and stirred at 20 ° C for 24 hr to perform surface treatment of the silica fine particles.

It was confirmed by a gas chromatography (Model 6850 manufactured by Agilent Co., Ltd.) that the γ-methacryloxy propyl trimethoxy silane and phenyltrimethoxy silane disappeared by hydrolysis. The measurement was carried out using a nonpolar column DB-1 (manufactured by J&W Co., Ltd.) at a temperature of 50 to 300 ° C at a temperature elevating rate of 10 ° C/min using He as a carrier gas at a flow rate of 1.2 cc/min using a hydrogen flame ionization detector by an internal standard method. The phenyltrimethoxy silane and y-methacryloxy propyl trimethoxy silane disappeared by 8 hr after adding the HCL solution.

Next, to 45 parts by mass of the surface treated silica fine particles, 22.5 parts by mass of trimethylol propane triacrylate (Trade Name: TMPTA, manufactured by Nippon Kayaku Co., Ltd. Tg of homopolymer > 250 ° C) and 22.5 parts by mass of admantyl methacrylate (Trade Mane: ADMA, manufactured by Osaka Organic Chemical Co., Ltd., Tg of homopolymer: 180 ° C) were added and mixed homogeneously. Thereafter, the mixed solution was heated at 40 ° C at 100 kPa under reduced pressure with stirring to remove volatile matters.

To the resultant mother liquor, 32.1 part by mass of EA-F5503 (manufactured by Osaka Gas Chemical Co., Ltd., Tg of homopolymer: 115 ° C) as the reactive (meth)acrylate (c), 1.07 parts by mass of pentamethyl piperidinyl methacrylate (Trade Name: FA-711MM, manufactured by Hitachi Kasei Co., Ltd.) as HALS, 0.75 part by mass of 1,1,3,3-tetramethylbutylperoxy-2-ethylhexanoate (Trade Name: Perocta O manufactured by NOF Corporation) as a thermal polymerization initiator and 0.32 part by mass of t-butylperoxy neodecanoate (Trade Name: Perbutyl ND manufactured by NOF Corporation) were dissolved. The resultant solution was filtered off using a membrane filter (hole diameter of 1. 0 µm) by a pressure filtration (pressure 0.2 MPa) to prepare a curable composition (B-4).

### Example 5

### Curable composition (B-5)

The procedure of Example 4 was repeated except for changing the amount of γ-methacryloxy propyl trimethoxy silane into 5.4 parts by mass, the amount of phenyltrimethoxy silane into 3.6 parts by mass, the amount of trimethylol propane triacrylate into 33.8 8 parts by mass and the amount of admantyl methacrylate into 11.3 parts by mass, to prepare a curable composition (B-5).

### Example 6

### Curable composition (B-6)

The procedure of Example 5 was repeated except for changing the amount of γ-methacryloxy propyl trimethoxy silane into 6.0 parts by mass and the amount of phenyltrimethoxy silane into 9.0 0 parts by mass, to prepare a curable composition (B-6).

### Example 7

### Curable composition (B-7)

The procedure of Example 4 was repeated except for changing the amount of γ-methacryloxy propyl trimethoxy silane into 5.4 parts by mass and the amount of phenyltrimethoxy silane into 3.6 6 parts by mass, to prepare a curable composition (B-7).

### Example 8

### Curable composition (B-8)

To a separable flask, 100 parts by mass of isopropyl alcohol dispersed colloidal silica (silica content of 30 % by mass, an average particle diameter of 10 to 20 nm, Trade Mark SNOWTEX IPA-ST manufactured by Nissan Chemical Industries, Ltd.) was introduced, and 5. parts by mass of γ-methacryloxy propyl trimethoxy silane and 3.6 parts by mass of phenyltrimethoxy silane were added and mixed with stirring. Furthermore, to the separable flask, 2.9 parts by mass of a 0.1825 % by mass HCL solution was added and stirred at 20 ° C for 24 hr to perform surface treatment of the silica fine particles.

It was confirmed by a gas chromatography (Model 6850 manufactured by Agilent Co., Ltd.) that the γ-methacryloxy propyl trimethoxy silane and phenyltrimethoxy silane disappeared by hydrolysis. The measurement was carried out using a nonpolar column DB-1 (manufactured by J&W Co., Ltd.) at a temperature of 50 to 300 ° C at a temperature elevating rate of 10 ° C/min using He as a carrier gas at a flow rate of 1.2 cc/min using a hydrogen flame ionization detector by an internal standard method. The phenyltrimethoxy silaneandy-methacryloxy propyl trimethoxy silane disappeared by 8 hr after adding the HCL solution.

Next, to 39 parts by mass of the surface treated silica fine particles, 30 parts by mass of trimethylol propane triacrylate (Trade Name: TMPTA, manufactured by Nippon Kayaku Co., Ltd. Tg of homopolymer > 250 ° C) was added and mixed homogeneously. Thereafter, the mixed solution was heated at 40 ° C at 100 kPa under reduced pressure with stirring to remove volatile matters.

To the resultant mother liquor, 15 part by mass of trimethylol propane triacrylate (Trade Name: TMPTA manufactured by Nippon Kayaku Co., Ltd. Tg of homopolymer > 250 ° C) as the reactive (meth)acrylate (b), 25 parts by mass of EA-F5503 (manufactured by Osaka Gas Chemical Co., Ltd., Tg of homopolymer : 115 ° C) as the reactive (meth)acrylate (c), 1 part by mass of pentamethyl piperidinyl methacrylate (Trade Name: FA-711MM, manufactured by Hitachi Kasei Co., Ltd.) as HALS, 0.7 part by mass of 1,1,3,3-tetramethylbutylperoxy-2-ethylhexanoate (Trade Name: Perocta O manufactured by NOF Corporation) as the thermal polymerization initiator and 0.3 part by mass of t-butylperoxy neodecanoate (Trade Name: Perbutyl ND manufactured by NOF Corporation) were dissolved. The resultant solution was filtered off using a membrane filter (hole diameter of 1.0 µm) by pressure filtration (pressure 0.2 MPa) to prepare a curable composition (B-8).

### Comparative Example 1

### Curable composition (B-9)

The procedure of Example 1 was repeated except for using o-phenylphenoxy ethyl acrylate(manufactured by Toa Gosei Co., Ltd.) in place of the acrylate compound (A-1) to prepare a curable composition (B-9).

### Comparative Example 2

### Curable composition (B-10)

50 parts by mass of the methacrylate compound (A-2) synthesized in Synthetic Example 2, 50 parts by mass of trimethylol propane triacrylate (Trade Name: Viscote#295, manufactured by Osaka Organic Chemical Co., Ltd.) and 1 part by mass of diphenyl-(2,4,6-trimethylbenzoyl)phosphine oxide (Trade Name: Lucirin TPO-L manufactured by BASF Japan Co., Ltd.) as the photo-polymerization initiator were mixed and dissolved. Thereafter, the resultant solution was filtered off using a membrane filter (hole diameter of 1.0 µm) by a pressure filtration (pressure 0.2 MPa) to prepare a curable composition (B-10).

### Comparative Example 3

### Curable composition (B-11)

The procedure of Example 4 was repeated except for using o-phenylphenoxy ethyl acrylate (manufactured by Toagosei Co., Ltd.) in place of EA-F5503 (manufactured by Osaka Organic Chemical Co., Ltd. Tg of homopolymer: 115 ° C), to prepare a curable composition (B-11).

### Comparative Example 4

### Curable composition (B-12)

29 parts by mass of trimethylol propane triacrylate (Trade Name:TMPTA; manufactured by Nippon Kayaku Co., Ltd.), 29 parts by mass of admantyl methacrylate (Trade Name: ADMA, manufactured by Osaka Organic Chemical Co., Ltd.), 42 parts by mass of EA-F5503 (manufactured by Osaka Gas Chemical Co., Ltd., Tg of homopolymer: 115 ° C, 1 part by mass of pentamethyl piperidinyl methacrylate (Trade Name FA-711MM, manufactured by Hitachi Kasei Co., Ltd.) as HALS, 0.7 part by mass of 1,1,3,3-tetramethyl butylperoxy-2-ethylhexanoate (Trade Name: Perocta 0, manufactured by NOF Corporation) as a thermal polymerization initiator and 0.3 part by mass of t-butylperoxy neodecanoate (Trade Name Perbutyl ND, manufactured by NOF Corporation were mixed and dissolved. Thereafter, the resultant solution was filtered off using a membrane filter (hole diameter of 1.0 µm) by a pressure filtration (pressure 0.2 MPa) to prepare a curable composition (B-12).

### Comparative Example 5

In Comparative Example 5, a polycarbonate resin (manufactured by Paltek Corporation) which is commercially available was used as an optical material.

### <Production of Cured film>

Each of the curable compositions (B-1), (B-2), (B-4) and (B-5) prepared in Examples 1 and 2, and Comparative Examples 1 and 2 was applied on a glass substrate in an amount such that the thickness of a cured film was 200 µm to prepare a coated film. Successively, the coated films were exposed in an exposure device equipped with an ultrahigh pressure mercury lamp at 4 J/cm² to cure the coated films. Thereafter, the cured films were subjected to annealing treatment at 180 ° C for 30 min.

The curable composition (B-3) prepared in Examples 3 was applied on a glass substrate in an amount such that the thickness of a cured film was 200 µm, and the coated film was heat treated at 140 ° C for 25 min to cure the coated film. Thereafter, the cured film was subjected to annealing treatment at 180 ° C for 30 min.

Each of the curable compositions (B-4) to (B-8), (B-11) and (B-12) prepared in Examples 4 to 8, and Comparative Examples 3 and 4 was applied on a glass substrate in an amount such that the thickness of a cured film was 200 µm to prepare a coated film. The coated films were heat treated at 130 ° C for 30 min to cure the coated films. Thereafter, the cured films were subjected to annealing treatment at 180 ° C for 30 min.

### <Methods for evaluating functions>

### (1) Viscosity

The viscosity of each of the curable compositions (B-1) to (B-12) was measured at 25 ° C using a B type viscometer DV-III ULTRA (manufactured by BROOKFIELD Co., Ltd.). The results are shown in Tables 1 and 2.

It is said that the curable composition having a properly low viscosity (for example, about 100 to 8,000 mPa·s) has good handling properties.

### (2) Refractive index

The cured film prepared in the above production process of the cured film was subjected heat treatment at 270 ° C for 1 min three times. Before and after the heat treatment, the refractive index at a wavelength of 594 nm was measured at 30 ° C using MODEL 2010M PRISM COUPLER (manufactured by Metricon Co., Ltd.). The results are shown in Tables 1 and 2. The smaller the change in the refractive index of the cured film before and after the heat treatment is, the better the cured film is.

### (3) Abbe's number

The cured film prepared in the above production process of the cured film was subjected to heat treatment at 270 ° C for 1 min three times. Before and after the heat treatment, the Abbe's number was determined from the refractive indexes at wavelengths of 486 nm, 589 nm and 656 nm measured at 30 ° C using MODEL 2010M PRISM COUPLER (manufactured by Metricon Co., Ltd.). The results are shown in Tables 1 and 2. The lower the Abbe's number of the cured film is, the better the cured film is. Furthermore, the smaller the change in the Abbe's number of the cured film before and after the heat treatment is, the better the cured film is.

### (4) Transmissivity of visible ultraviolet rays

The cured film prepared in the above production process of the cured film was subjected to heat treatment at 270 ° C for 1 min three times. Before and after the heat treatment, the transmissivity of a light ray with a wavelength of 400 nm (T %) was measured using a spectrophotometer (UV3100, manufactured by JASCO Corporation) in accordance with JIS-K7105. The results are shown in Tables 1 and 2. The higher the transmissivity of the cured film is, the better the cured film is. Furthermore, the smaller the change in the transmissivity of the cured film before and after the heat treatment is, the better the cured film is.

### (5) Transmissivity of total light rays

The cured film prepared in the above production process of the cured film was subjected to heat treatment at 270 ° C for 1 min three times. Before and after the heat treatment, the transmissivity of total light rays was measured using a haze meter COH400 (manufactured by Nippon Denshoku Industries Co., Ltd.). The results are shown in Tables 1 and 2. The higher the transmissivity of the cured film is, the better the cured film is. Furthermore, the smaller the change in the transmissivity of the cured film before and after the heat treatment is, the better the cured film is.

### (6) Glass transition temperature

With regard to the cured film prepared in the above production process of the cured film, the tan δ value was measured in a tensile mode at a temperature of 30 to 300 ° C at a temperature elevating rate of 2 ° C/min, at a frequency of 1 Hz using DMS6100 (manufactured by Seiko Electronics Industrial Co., Ltd.). The temperature of the peak of the tan δ value was taken as the glass transition temperature. The results are shown in Tables 1 and 2. The higher the glass transition point of the cured film is, the better the heat resistance of the cured film is.

### (7) Temperature of 5 % weight decrease

With regard to the cured film prepared in the above production process of the cured film, the temperature of a weight decrease by 5% was determined using TG-DTA (manufactured by Seiko Electronics Industrial Co., Ltd.) in treating at a nitrogen atmosphere at a temperature of 20 to 500 ° C at a temperature elevating rate of 10 ° C/min. The results are shown in Tables 1 and 2. The higher the temperature of a 5% weight decrease of the cured film is, the better the heat resistance of the cured film is.

### (8) Coefficient of refractive index depending on temperature

With regard to the cured film prepared in the above production process of the cured film, the refractive index was measured using MODEL 2010 M PRISM COUPLER (manufactured by Metricon Co., Ltd.) by changing the temperature in a temperature range of 30 to 60 ° C by 5 ° C. The refractive index at a wavelength of 594 nm to the temperature was plotted to determine a straight line. The absolute value of the tilt of the straight line was determined as a coefficient of refractive index depending on temperature. The results are shown in Tables 1 and 2. As the absolute value of the cured film is smaller, the coefficient of refractive index depending on temperature of the cured film is smaller and the cured film has excellent resistance to environment.

**Table 1-1**

| Items for evaluation | Unit | Heat treatment | Example 1 | Example 2 | Example 3 | Example 4 |
|---|---|---|---|---|---|---|
| Viscosity of Composition | mPa·s | - | 6200 | 3200 | 3100 | 1870 |
| Refractive index | - | before | 1.5250 | 1.5248 | 1.5181 | 1.5383 |
| | | after | 1.5229 | 1.5219 | 1.5178 | 1.5371 |
| Abbe's number | - | before | 39 | 39 | 39 | 39 |
| | | after | 41 | 39 | 39 | 39 |
| Transmissivity (400 nm) | % | before | 80 | 85 | 87 | 88 |
| | | after | 81 | 83 | 83 | 87 |
| Transmissivity of all light rays | % | before | 92 | 93 | 93 | 91 |
| | | after | 92 | 93 | 93 | 91 |
| Glass transition temperature | °C | before | >230 | >230 | >230 | 166 |
| Temperature of 5% weight decrease | °C | before | 362 | 377 | 374 | 363 |
| Coefficient of refractive index depending on temperature | x10⁻⁵/°C | before | - | - | 5.8 8 | 9.0 |

**Table 1-2**

| Items for evaluation | Unit | Heat treatment | Example 5 | Example 6 | Example 7 | Example 8 |
|---|---|---|---|---|---|---|
| Viscosity of Composition | mPa·s | - | 2250 | 2770 | 3920 | 5950 |
| Refractive index | - | before | 1.5366 | 1.5391 | 1.5379 | 1.5280 |
| | | after | 1.5356 | 1.5379 | 1.5379 | 1.5283 |
| Abbe's number | - | before | 40 | 39 | 39 | 42 |
| | | after | 39 | 38 | 39 | 40 |
| Transmissivity (400 nm) | % | before | 89 | 88 | 88 | 89 |
| | | after | 88 | 87 | 88 | 88 |
| Transmissivity of all light rays | % | before | 92 | 91 | 92 | 92 |
| | | after | 92 | 92 | 92 | 92 |
| Glass transition temperature | °C | before | 162 | 166 | 160 | >230 |
| Temperature of 5% weight decrease | °C | before | 377 | 380 | 362 | 385 |
| Coefficient of refractive index depending on temperature | x10⁻⁵/°C | before | 9.8 8 | 9.8 | 8.8 | 9.0 |

**Table 2-1**

| Items for evaluation | Unit | Heat treatment | Comparative Example 1 | Comparative Example 2 | Comparative Example 3 |
|---|---|---|---|---|---|
| Viscosity of Composition | mPa·s | - | 1390 | 170 | 330 |
| Refractive index | - | before | 1.5326 | 1.5498 | 1.5396 |
| | | after | 1.5322 | 1.5495 | 1.5397 |
| Abbe's number | - | before | 39 | 36 | 39 |
| | | after | 39 | 35 | 39 |
| Transmissivity (400 nm) | % | before | 82 | 77 | 89 |
| | | after | 76 | 68 | 87 |
| Transmissivity of all light rays | % | before | 93 | 93 | 91 |
| | | after | 92 | 92 | 91 |
| Glass transition temperature | °C | before | 92 | >230 | 117 |
| Temperature of 5% weight decrease | °C | before | 382 | 372 | 356 |
| Coefficient of refractive index depending on temperature | x10⁻⁵/°C | before | - | 10.2 | 11.6 |

**Table 2-2**

| Items for evaluation | Unit | Heat treatment | Comparative Example 4 | Comparative Example 5 |
|---|---|---|---|---|
| Viscosity of Composition | mPa·s | - | 160 | - |
| Refractive index | - | before | 1.5556 | 1.5841 |
| | | after | 1.5556 | - |
| Abbe's number | - | before | 38 | 30 |
| | | after | 37 | - |
| Transmissivity (400 nm) | % | before | 90 | 89 |
| | | after | 90 | - |
| Transmissivity of all light rays | % | before | 91 | 92 |
| | | after | 91 | - |
| Glass transition temperature | °C | before | 149 | 140 |
| Temperature of 5% weight decrease | °C | before | 373 | 473 |
| Coefficient of refractive index depending on temperature | x10⁻⁵/°C | before | 11.2 | 10.7 7 |

As is clear from Table 1, the curable compositions as shown in Examples 1 to 8 have good handling properties because of having appropriate viscosities. Furthermore, the cured product of the present invention has a low Abbe's number and the combined use thereof with a material having a high Abbe's number can effectively decrease chromatic aberration. Moreover, the cured product of the present invention has excellent heat resistance, a small change in transmissivity (400 nm) before and after heat treatment at 270 ° C for 1 min three times and a small change in transmissivity of total light rays and excellent transparency.

The cured products of the examples have an absolute value of the coefficient of refractive index depending on temperature of not more than 10.0 x 10⁻⁵/° C. Namely, they have a small change in the refractive index to temperature and excellent resistance to environment.

In Comparative Examples 1 and 2, since the handling properties are good and the Abbe's number is low, but the heat resistance is low, the transmissivity after the heat treatment is low and the transparency is inferior.

In Comparative Examples 3 and 4, the handling properties are good and the Abbe's number is low, but the absolute value of the coefficient of refractive index depending on temperature is larger and the resistance to environment is inferior.

In Comparative Example 5, the polycarbonate resin is conventionally used for optical lenses, has excellent transparency and a low Abbe's number but has inferior heat resistance. The absolute value of the coefficient of refractive index depending on temperature is 10.7 x 10⁻⁵/° C and the resistance to environment is inferior.

### POSSIBILITY OF INDUSTRIAL USE

The curable composition of the present invention comprises the silica fine particles which have been surface treated with specific two silane compounds, specific two (meth)acrylates and the polymerization initiator, and has a favorable viscosity and good handling properties.

The cured product obtainable by curing the curable composition has excellent transparency and heat resistance, and a low Abbe' s number and further can effectively decrease chromatic aberration by the combined use with a material having a high Abbe' s number.

The cured product can be suitably used for transparent substrates, optical lenses, optical disk substrates, plastic substrates for liquid crystal display elements, substrates for color filters, plastic substrates for organic EL display elements, solar battery substrates, touch panels, optical elements, optical waveguides and LED sealing materials.

Furthermore, the cured product of the present invention has a small change in refractive index caused by temperature change and excellent resistance to environment, and thereby it can be used for optical lenses and optical waveguides.

## Claims

1. A curable composition comprising
(a) silica fine particles,
(b) a (meth)acrylate compound having at least two ethylenic unsaturated groups and having no ring structure,
(c) a (meth)acrylate compound having at least two ethylenic unsaturated groups and having an aromatic ring structure, and
(d) a polymerization initiator
wherein the silica particles (a) are surface treated by a silane compound (e) represented by the following formula (1) and a silane compound (f) represented by the following formula (2); 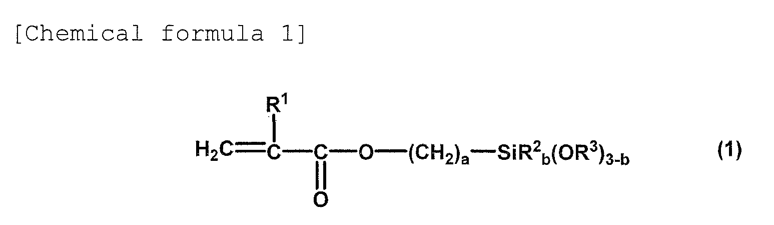 in the formula (1), R¹ is hydrogen atom or a methyl group, R² is an alkyl group having 1 to 3 carbon atoms or a phenyl group, R³ is hydrogen atom or a hydrocarbon group having 1 to 10 carbon atoms, a is an integer of 1 to 6 and b is an integer of 0 to 2, 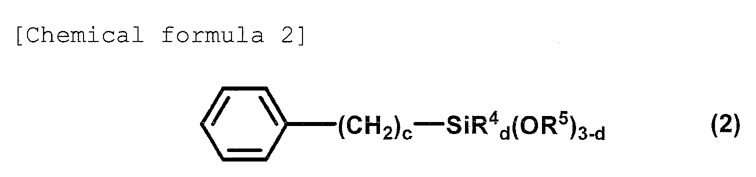 in the formula (2), R⁴ is an alkyl group having 1 to 3 carbon atoms or a phenyl group, R⁵ is hydrogen atom or a hydrocarbon group having 1 to 10 carbon atoms, c is an integer of 0 to 6 and d is an integer of 0 to 2.

2. The curable composition according to claim 1 further comprising (g) a (meth)acrylate compound having one ethylenic unsaturated group and an alicyclic structure and/or aromatic ring structure.

3. The curable composition according to claim 1 or 2 wherein the (meth)acrylate compound (b) is a (meth)acrylate compound having 3 ethylenic unsaturated groups and having no ring structure.

4. The curable composition according to any one of claims 1 to 3 wherein the (meth)acrylate compound (c) is a compound represented by the following formula (3) and/or a compound represented by the following formula (4); 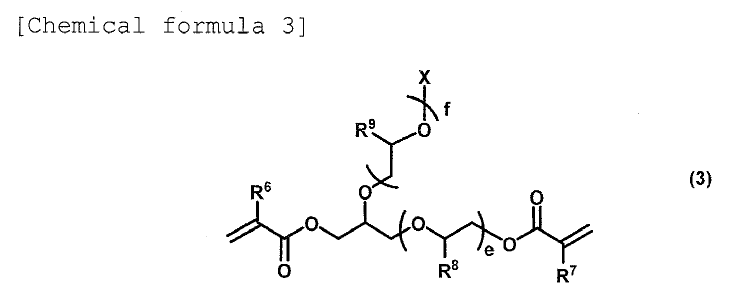 in the formula [3], each of R⁶, R⁷, R⁸ and R⁹ is independently hydrogen atom or a methyl group, X is an organic group having an aromatic ring and 6 to 30 carbon atoms and each of e and f is independently an integer of 0 to 3, 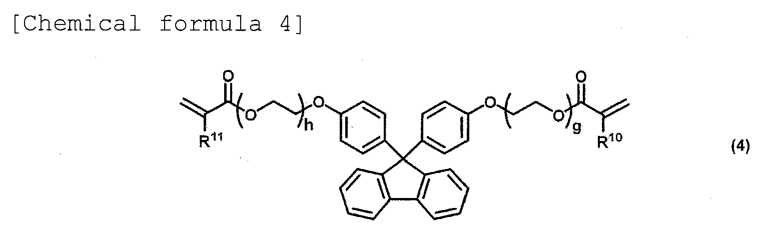 in the formula [4], each of R¹⁰ and R¹¹ is independently hydrogen atom or a methyl group and each of g and f is independently an integer of 0 to 3.

5. The curable composition according to any one of 1 to 4 wherein the silica fine particles (a) is surface treated by 5 to 40 parts by mass of the silane compound (e) based on 100 parts by mass of the silica fine particles (a) and 5 to 40 parts by mass of the silane compound (f) based on 100 parts by mass of the silane compound (a).

6. The curable composition according to any one of claims 2 to 5 wherein a homopolymer of each of the (meth) acrylate compound (b), the (meth)acrylate compound (c) and the (meth)acrylate compound (g) has a glass transition temperature of not lower than 80 ° C.

7. The curable composition according to any one of claims 1 to 6, which has a viscosity at 25 ° C of 30 to 10,000 mPa·s.

8. A cured product obtainable by curing the curable composition as claimed in any one of claims 1 to 7.

9. The cured product according to claim 8, which has an Abbe's number of not more than 50.

10. An optical material comprising the cured product as claimed in claim 8 or 9.

11. An optical lens comprising the cured product as claimed in claim 8 or 9.
